# EUROPEAN PATENT SPECIFICATION

(11) **EP 0 952 469 B1**
(45) Date of publication and mention of the grant of the patent: **26.05.2004**
(21) Application number: 98947799.7
(22) Date of filing: 09.10.1998
(51) Int. Cl.: G02B 5/30, G02F 1/1335, G02F 1/13363

(54) **OPTICAL ANISOTROPIC DEVICE**
OPTISCH ANISOTROPE VORRICHTUNG
DISPOSITIF ANISOTROPE OPTIQUE

(30) Priority: 09.10.1997 JP 27672697
(43) Date of publication of application: 27.10.1999
(73) Proprietor: Nippon Mitsubishi Oil Corporation, Tokyo (JP)
(72) Inventor: NUMAO, Yosuke-C.T.R.Lab.Nippon Mitsubishi Oil Corp, Kanagawa 231-0815 (JP); YODA, Eiji-C.T.R.Lab. Nippon Mitsubishi Oil Corp., Kanagawa 231-0815 (JP); UESAKA, Tetsuya-CTR Lab. Nippon Mitsubishi Oil C, Kanagawa 231-0815 (JP); TOYOOKA, Takehiro-CTR Lab. Nippon Mitsubishi Oil C, Kanagawa 231-0815 (JP)
(74) Representative: Colmer, Stephen Gary
(86) International application number: PCT/JP1998/004561
(87) International publication number: WO 1999/019753

(56) References cited:
- EP-A- 0 628 847
- EP-A- 0 669 541
- EP-A- 0 854 376
- JP-A- 7 140 326
- JP-A- 7 181 324
- JP-A- 8 050 206
- JP-A- 8 327 822
- JP-A- 9 133 810
- JP-A- 9 288 210
- JP-A- 10 186 356
- JP-A- 10 206 637
- US-A- 5 583 679
- US-A- 5 619 352

## Description

### FIELD OF THE INVENTION

The present invention relates to an optically anisotropic element capable of greatly improving display characteristics such as front contrast and viewing angle characteristics, as well as a twisted nematic type liquid crystal display device using the said optically anisotropic element.

### PRIOR ART

An active drive twisted nematic type liquid crystal display device (hereinafter referred to as "TN-LCD" ) using TFT or MIM element affords an image quality comparable to a CRT as seen from the front side, in addition to the characteristics inherent in LCD such as small thickness, light weight and low power consumption. For this reason, the TN-LCD is spread widely as a display for notebook type personal computers, portable television and portable information terminals. However, the conventional TN-LCD inevitably involves a problem associated with a viewing angle such that there occurs a change in display color or display contrast when seen obliquely due to refractive index anisotropy. It has keenly been desired to solve this problem, and various attempts have been made for improvement. For example, there have been proposed a method (a halftone gray scale method) wherein one pixel is divided and the voltage applied to each divide pixel is changed at a certain ratio, a method (a domain dividing method) wherein one pixel is divided and a rising direction of liquid crystal molecules in each divided pixel is changed, a method (an IPS method) wherein a lateral electric field is applied to liquid crystal, a method (a VA liquid crystal method) wherein a vertically oriented liquid crystal is driven, and a method (an OCB method) wherein a bend orientation cell and an optical compensator are combined together. Developments and trial manufactures have been made in connection with these proposed methods.

Although these methods afford certain effects, it is necessary that components such as alignment film, electrode, and low-molecular liquid crystal, as well as the orientation of low-molecular liquid crystal to be controlled, should be changed from those so far adopted. In other words, it is necessary to establish manufacturing techniques and manufacturing equipment for those components, with consequent difficulty of manufacture and increase of cost.

On the other hand, a method has been proposed wherein the viewing angle is enlarged by using a member for improving the viewing angle such as a compensating film or a compensator in the conventional TN-LCD without changing at all the structure of TN-LCD itself. This method is very economical because it is not necessary to make reform and increase of the TN-LCD manufacturing equipment.

Generally, the occurrence of a problem associated with the viewing angle in a normally white (NW) mode of TN-LCD depends on the state of orientation of a low-molecular liquid crystal in a driving liquid crystal cell during black display with voltage applied. A low-molecular liquid crystal is oriented substantially vertically. Usually employed is a low-molecular liquid crystal which exhibits an optically positive uniaxial property. For widening the viewing angle of TN-LCD and hence for compensating the positive uniaxial property in black display of the liquid crystal cell, it has been proposed to use a film which exhibits an optically negative uniaxial property. Further, taking note of the point that in the vicinity of the alignment film interface, also in black display, the liquid crystal in the driving liquid crystal cell is oriented in parallel or inclinedly with respect to the cell interface, there also has been proposed a compensating method using a negative uniaxial film with an optical axis inclined at a certain angle.

For example, in each of JP4-349424A and JP6-250166 there is proposed an optical compensating film using a cholesteric film with an inclined spiral axis, as well as an LCD using the same.

However, it is very difficult to fabricate a cholesteric film with an inclined spiral axis, and problems remain to be solved in its industrial manufacture.

Likewise, in each of JP5-249547A and JP6-331979A there is proposed an LCD using a negative uniaxial compensator with an inclined optical axis.

As another form of a compensating film there also has been proposed an alignment film which uses a liquid crystalline polymer having a positive uniaxial property. For example, JP7-140326A proposes a compensator for LCD which compensator is constituted by a liquid crystalline polymer film of twisted and tilted orientation and which is used for widening the viewing angle of LCD.

As noted above, various compensating films have been proposed for improving the viewing angle and TN-LCDs characterized by a wide viewing angle have been developed remarkably. However, those capable of fully satisfying the required display characteristics such as improved front contrast and viewing angle characteristics have not been developed yet.

### OBJECT OF THE INVENTION

The present invention has been accomplished for solving the above-mentioned problems and it is an object of the invention to provide, by combining a specific optically anisotropic film with a light diffusing layer, an optically anisotropic element capable of attaining such excellent display characteristics as heretofore been unattainable, particularly capable of greatly improving viewing angle characteristics in all of vertical and transverse directions, as well as a liquid crystal display device using the said optical anisotropic element.

### SUMMARY OF THE INVENTION

The present invention relates to an optical anisotropic element as defined in claim 1 comprising (A) an optically anisotropic film and (B) at least one light diffusing layer, the optically anisotropic film (A) being formed substantially by a liquid crystalline polymer which exhibits an optically positive uniaxial property, with a nematic hybrid orientation structure being fixed to the optically anisotropic film, the nematic hybrid orientation structure being formed by the said liquid crystalline polymer in a state of liquid crystal of the polymer. The present invention is further concerned with an optically anisotropic element wherein the liquid crystalline polymer exhibiting an optically positive uniaxial property contains at least one kind of a monofunctional structural unit at one or both ends of the polymer chain, or is used as a composition containing the liquid crystalline polymer. The present invention is further concerned with an optically anisotropic element wherein the light diffusing layer (B) has a total light transmittance of 50% or more, preferably 70% or more. The present invention is further concerned with an optically anisotropic element wherein the light diffusing layer (B) has a diffuse transmittance of 5% to 85%, preferably 10% to 70%. The present invention is further concerned with an optically anisotropic element wherein the light diffusing layer (B) is present at least one layer in contact with one or both sides of the optically anisotropic film (A).. The present invention is further concerned with a twisted nematic liquid crystal display device provided with a driving liquid crystal cell, the driving liquid crystal cell comprising a pair of transparent substrates having electrodes and a nematic liquid crystal, and further provided with upper and lower polarizing plates disposed above and below the liquid crystal cell, with at least one sheet of the optically anisotropic element being disposed between the liquid crystal cell and the upper or the lower polarizing plate.

### PREFERRED EMBODIMENTS OF THE INVENTION

The present invention will be described in more detail hereinunder.

The optically anisotropic element of the present invention greatly improves the viewing angle characteristics of TN-LCD. A description will be given first of TN-LCD to be subjected to compensation.

TN-LCDs can be classified by driving methods into a simple matrix type and an active matrix type using an active element as electrode, i.e., TFT (Thin Film Transistor) electrode or MIM (Metal Insulator Metal) or TFD (Thin Film Diode) electrode. The optically anisotropic element of the present invention is effective for both types.

As to the known halftone gray scale method (pixel dividing method) and domain dividing method have been developed in an effort to widen the viewing angle of LCD from the driving liquid crystal cell side. Even for such LCDs somewhat improved in viewing angle, the optically anisotropic element of the present invention is effective and can make a further improvement for the viewing angle.

The optically anisotropic element of the present invention comprises (A) an optically anisotropic film with a nematic hybrid orientation fixed thereto and (B) at least one light diffusing layer.

Reference will first be made to the optically anisotropic film (A) used in the present invention.

The nematic hybrid orientation in the optically anisotropic film (A) indicates an orientation structure wherein the liquid crystalline polymer exhibiting an optically positive uniaxial property and substantially constituting the film (A) is in a state of nematic orientation and wherein the angle between a director of the liquid crystalline polymer and the upper surface of the film and the angle between a director and the film lower surface are different from each other. Since the director-film surface angle is thus different between the vicinity of the upper interface and the vicinity of the lower interface, it can be said that the said angle changes in a continuous manner between the upper and lower surfaces of the film.

In the optically anisotropic film (A) of the present invention, the directors of the liquid crystalline polymer face at different angles anywhere in the film thickness direction. Therefore, when the film (A) is seen as a film structure, there exists no optical axis.

The optically anisotropic film possesses the following optical parameters.

Description will be directed first to an intra-film surface apparent retardation value obtained when the film is seen in the normal line direction thereof. In the film which is in a state of nematic hybrid orientation, the refractive index ( "ne" hereinafer) in a direction parallel to directors and the refractive index ( "no" hereinafter) perpendicular to directors are different from each other. Assuming that the value obtained by subtracting no from ne is an apparent birefringence, an apparent retardation value is given as the product of apparent birefringence and absolute film thickness. This apparent retardation value can be obtained easily by polarimetry such as ellipsometry. An apparent retardation value of the optically anisotropic film (A) used in the present invention is usually in the range of 5 to 500 nm, preferably 10 to 300 nm, more preferably 15 to 150 nm, for a monochromatic light of 550 nm. If the apparent retardation value is smaller than 5 nm, a satisfactory viewing angle widening effect may not be obtained. If it is larger than 500 nm, there may occur an unnecessary coloration in the liquid crystal display when the film is seen obliquely.

The following description is now provided about the angle of director.

The angle of director in the thickness direction of the film is usually in the range of 60° to 90°, preferably 80° to 90°, as an absolute value at one of the upper and lower surfaces of the film in terms of an acute-side angle between the director of the liquid crystalline polymer located near a film interface and a projection component of the director to the film surface. On the opposite surface side the angle in question is usually in the range of 0° to 50°, preferably 0° to 30°, as an absolute value.

Now, an average tilt angle will be described below.

In the present invention, an average value in the film thickness direction of angles between directors of the liquid crystalline polymer exhibiting a positive uniaxial property and projection components of the directors to the film plane is defined to be an average tilt angle. The average tilt angle can be determined by the application of a crystal rotation method. The average tilt angle of the optically anisotropic film (A) is in the range of 10° to 60°, preferably 20° to 50°. If the average tilt angle is smaller than 10° or larger than 60°, it may be impossible to obtain a satisfactory viewing angle widening effect.

The thickness of the optically anisotropic film (A) depends of various such optical parameters as referred to above, so cannot be said sweepingly, but usually it is in the range of 0.1 to 20 µ, preferably 0.2 to 10 µ, more preferably 0.3 to 5 µm. If the film thickness is smaller than 0.1 µm, a satisfactory compensating effect may not be obtained, and if the film thickness exceeds 20 µm, the liquid crystal display may be colored to an unnecessary extent.

The optically anisotropic film (A) having the above nematic hybrid oritentation structure, various optical parameters and film thickness is formed substantially by the liquid crystalline polymer exhibiting an optically positive uniaxial property. It is essential that the liquid crystalline polymer which forms the film (A) should have a nematic phase as a crystal phase, should form a nematic hybrid orientation at a temperature exceeding its liquid crystal transition temperature on an orienting substrate, and should be capable of being fixed in a glassy state without impairing the said orientation form. No special limitation is placed on the liquid crystalline polymer to be used if only the polymer possesses the properties defined above. A liquid crystalline polymer having a monofunctional structural unit at one or both ends of the polymer chain is particularly preferred in the present invention. The monofunctional structural unit indicates a unit derived from a compound having a long-chain alkyl group of 3 to 20 carbon atoms or a long-chain fluoroalkyl group of 3 to 20 carbon atoms and having one functional site such as a monoalcohol or a monocarboxylic acid.

To be more specific, the monofunctional structural unit used such a liquid crystalline polymer as mentioned above indicates a structural unit obtained by allowing a monomer to be present in the preparation (during or after the polymerization reaction) of a condensation polymer as a liquid crystalline polymer and allowing it to be incorporated into the polymer molecule, the said monomer having one functional group corresponding to a functional group in a bifunctional monomer which is used in forming the condensation polymer. Usually, the structural unit is incorporated in one or both ends of the polymer molecule. That is, the number of the monofunctional structural unit present in the polymer molecule is usually one or two per molecule.

Typical examples of the monofunctional structural unit are expressed in the following formulas: 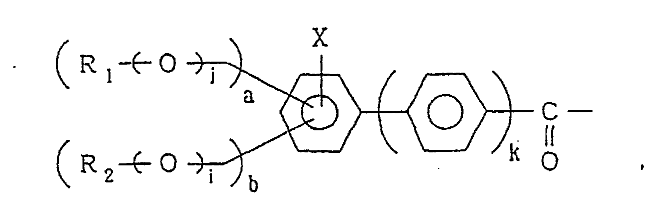 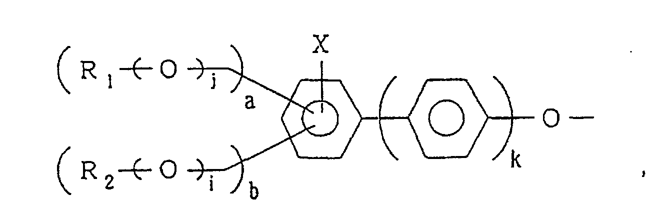 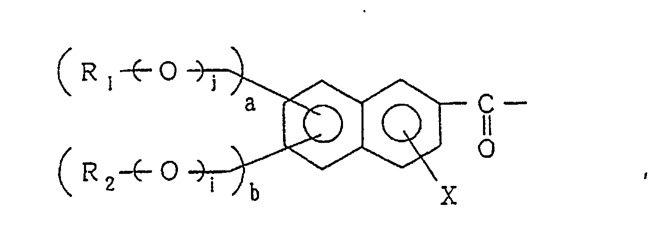 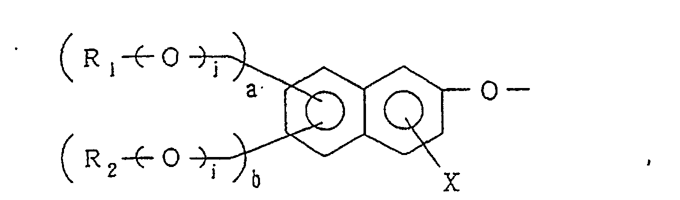 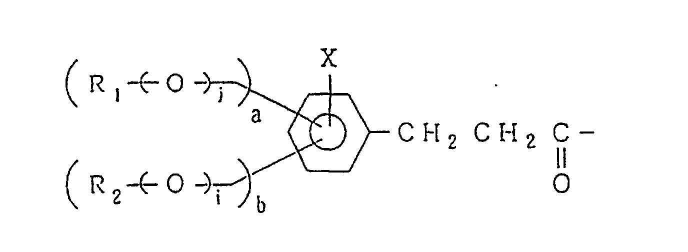 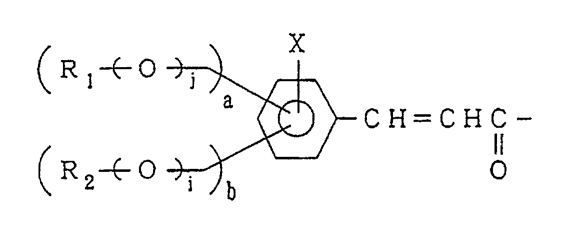 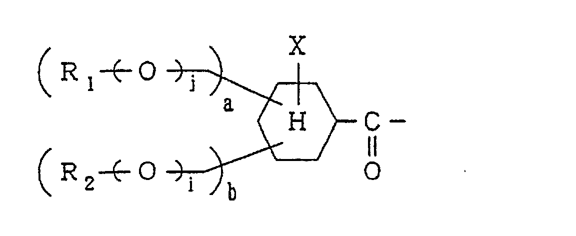 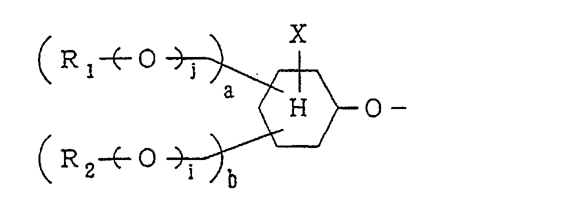 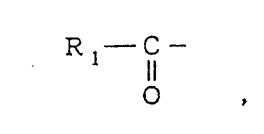 R₁-O-

In the general formulas described above, R₁ and R₂ may be the same or different; R₁ and R₂ each represent a long-chain C₍₃₋₂₀₎ alkyl or a long-chain C₍₂₋₂₀₎ fluoroalkyl group; preferable examples of which include
CH₃ CH₂ CH₂- , CH₃ CH (CH₃)CH₂- ,
C (CH₃)₃-, (CH₃)₂ CH-, CH₃ (CH₂)₃-, C₅H₁₁-,
C₉ H₁₉- , C₆ H₁₃- , C₈ H₁₇- , C₇ H₁₅-, C₁₀H₂₁-,
C₁₂H₂₅- , C₁₄H₂₉- , C₁₈H₃₇- , C₁₆H₃₃-, C₂₀H₄₁-,
CF₃ CH₂- , CF₃ CF₂- , (CF₃ ) ₂ CF- ,
(CF₃) ₂ CF (CF₂ ) ₂- , C₆ F₁₃- , C₈ F₁₇- ,
CF₃(CF₂)₃ CH₂ CH₂- , (CF₃)₂ CF (CF₂)₈- ,
CHF₂ CF₂ CH₂- , CF₃ CH₂ CH₂ - ,
(CF₃)₂ CF (CF₂)₈ CH₂ CH₂- ,
CF₃(CF₂)₇ CH₂ CH₂ - , H (CF₂ )₄CH₂- ,
CF₃(CF₂)₉ CH₂ CH₂ - , CF₃(CF₂)₃(CH₂)₆- ,
CF₃ CF₂(CH₂)₆- , CHF₂ CF₂ CH₂- ,
CF₃(CF₂)₅ CH₂ CH₂ - , H (CF₂)₆CH₂- ,
H(CF₂)₄CH₂- , H(CF₂)₈CH₂- ,
and the like; X represents halogen such as fluorine and chlorine or the like; i is 0 or 1; j is 0 or 1; k is 0 or 1; a is 0 or 1, b is 0 or 1, provided a + b ≠ 0.

Preferable examples of R₁ and R₂ include the following groups.

Preferable examples of the monofunctional structural unit produced from the monohydric alcohol, monocarboxylic acid and a functional derivative of these compounds include the following units,

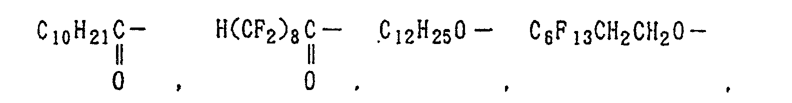

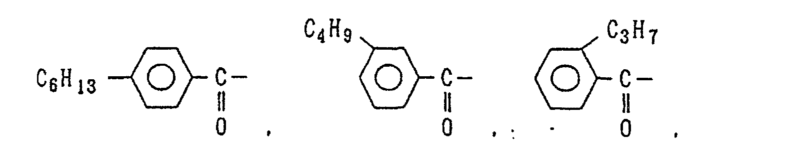

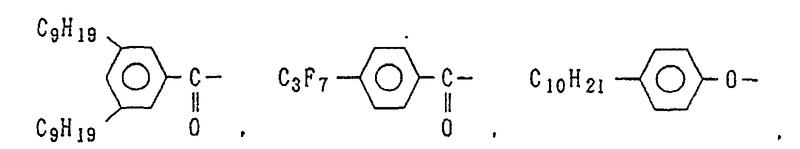

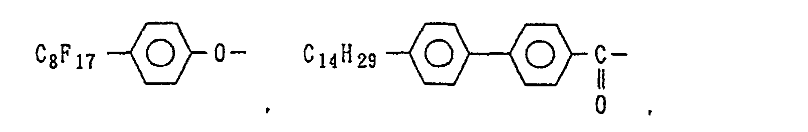

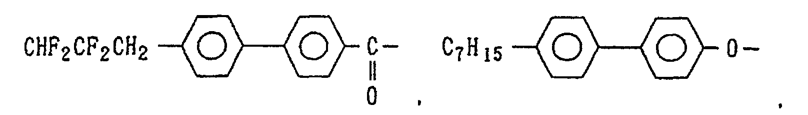

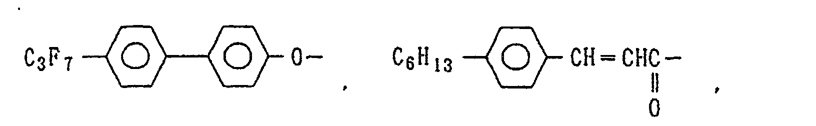

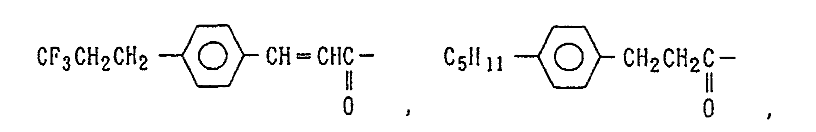

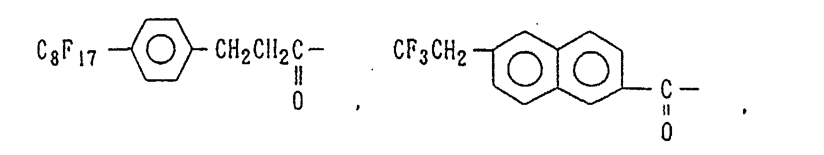

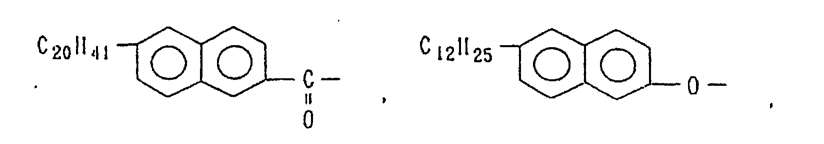

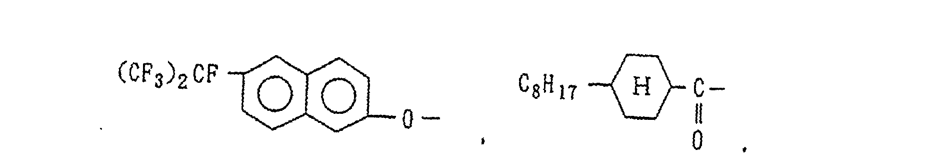

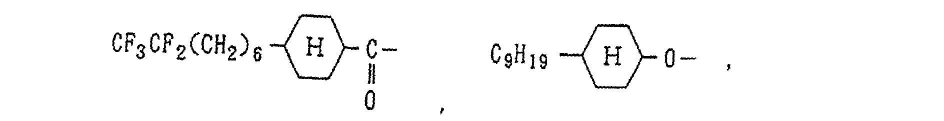

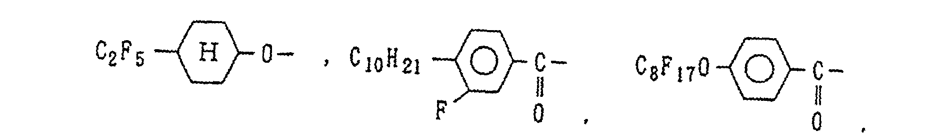

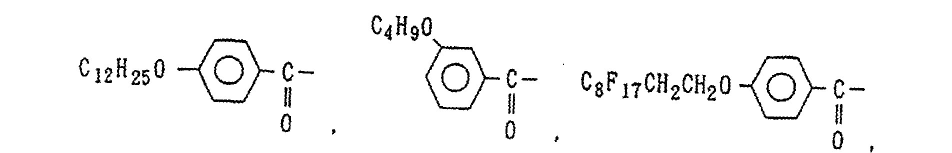

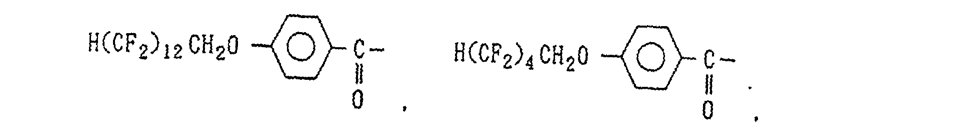

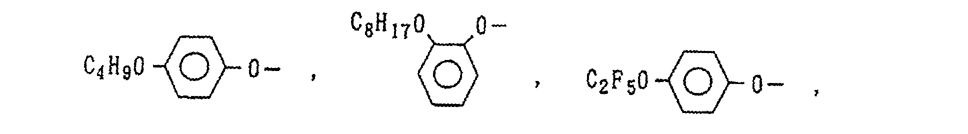

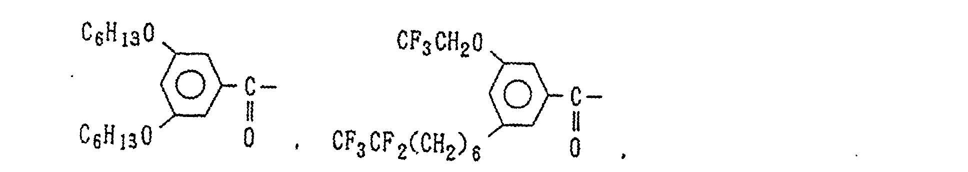

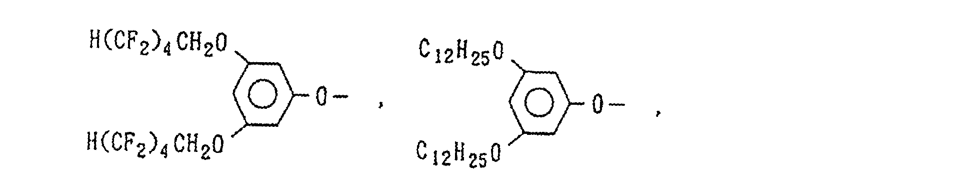

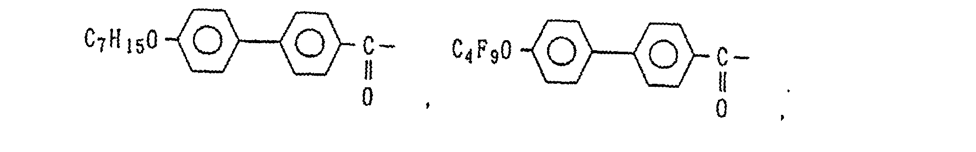

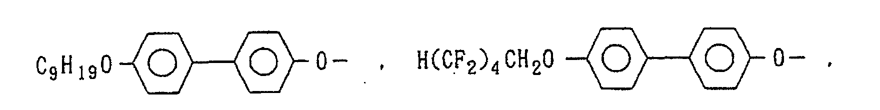

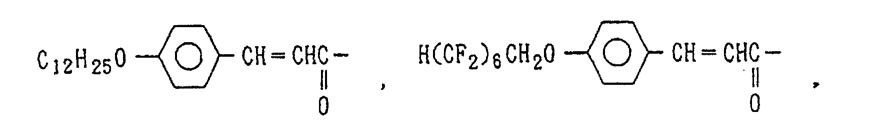

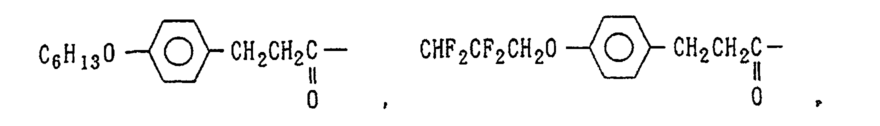

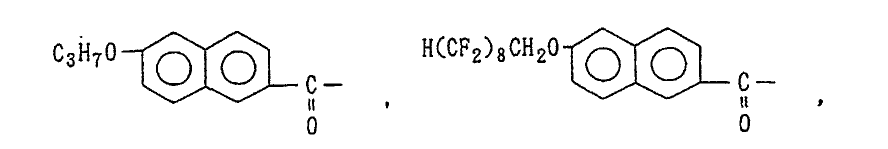

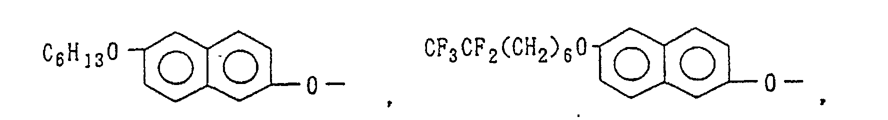

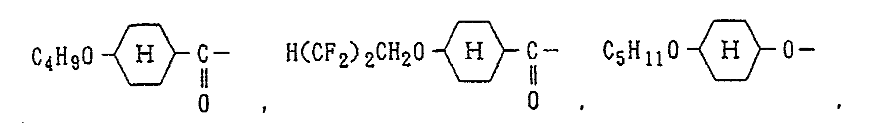

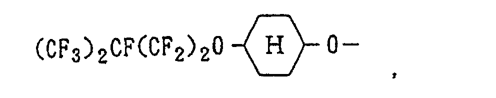

One or two units selected from the above-described monofunctional structural units constitute one end or both ends of a polymer chain. In the case where the polymer chain has the structural units at both ends of the chain, the structural units do not need to be the same.

As a preferred example of the liquid crystalline polymer having one or more kinds of monofunctional structural units at one or both ends of the polymer chain and exhibiting an optically positive uniaxial property, there is mentioned a homeotropic-orientable main chain type liquid crystalline polymer alone having the said structural unit, or a liquid crystalline polymer composition containing at least one such liquid crystalline polymer.

### (The term "composition" as used herein means a mixture.)

The homeotropic orientation represents a state of orientation in which the directors of the liquid crystalline polymer are nearly perpendicular to the a substrate plane. Whether the liquid crystalline polymer used is capable of exhibiting the homeotropic orientation or not is determined by forming a layer of the liquid crystalline polymer on a substrate and judging the state of its orientation. As examples of substrates employable in this judgment, though no limitation is placed thereon, there are mentioned glass substrates, including soda glass, potash glass and borosilicate glass substrates, and optical glass substrates such as crown glass and flint glass substrates, as well as plastic films or sheets which are resistant to heat at the liquid crystal temperature of the liquid crystalline polymer, such as films or sheets of polyethylene terephthalates, polyethylene naphthalates, polyphenylene oxides, polyimides, polyamide-imides, polyether imides, polyamides, polyether ketones, polyether ether ketons, polyketone sulfides, and polyether sulfones.

The substrates exemplified above are used after cleaning their surfaces with, for example, acids, alcohols, or detergents. The aforesaid judgment of orientability must be done on a substrate not having been subjected to such a surface treatment as silicon treatment, rubbing treatment, or uniaxial stretching.

In the present invention, the liquid crystalline polymer (alone) capable of exhibiting the homeotropic orientation is defined to be a polymer which, when formed into a film on any of the above-exemplified substrates not having been subjected to any surface treatment, exhibits the homeotropic orientation in the temperature region in which the liquid crystalline polymer assumes the state of liquid crystal. However, certain liquid crystalline polymers exhibit the homeotropic orientation specifically at temperatures near the liquid crystal - isotropic phase transition point. Therefore, it is desirable to adopt a temperature usually lower by at least 15°C, more preferably at least 20°C, than the liquid crystal - isotropic phase transition point.

The liquid crystalline polymer exhibiting the homeotropic orientation will now be described more concretely. Examples of the liquid crystalline polymer include main chain type liquid crystalline polymers having the foregoing monofunctional structural unit, such as polyesters, polyimides, polyamides, polycarbonates, and polyester imides. Above all, liquid crystalline polyesters are preferred because they are easy to be prepared, easy to be formed into films and can afford films of stable physical properties. More preferred are liquid crystalline polyesters containing, in addition to the monfunctional structural unit, another structural unit as a constituent of the polymer main chain, for example a bifunctional structural unit such as a dicarboxylic acid unit, a diol unit, or a hydroxycarboxylic acid, or another polyfunctional structural unit. Still more preferred are liquid crystalline polyesters containing an ortho-substituted aromatic unit as a structural unit in the main chain. Examples are catechol unit, salicylic acid unit, phthalic acid unit, 2,3-naphthalenediol unit, 2,3-naphthalenedicarboxylic acid unit, and those having substituents on these benzene rings. 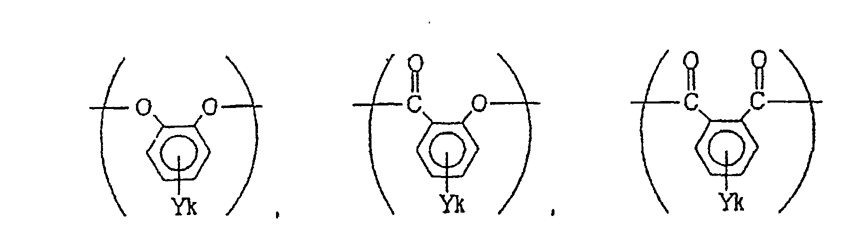 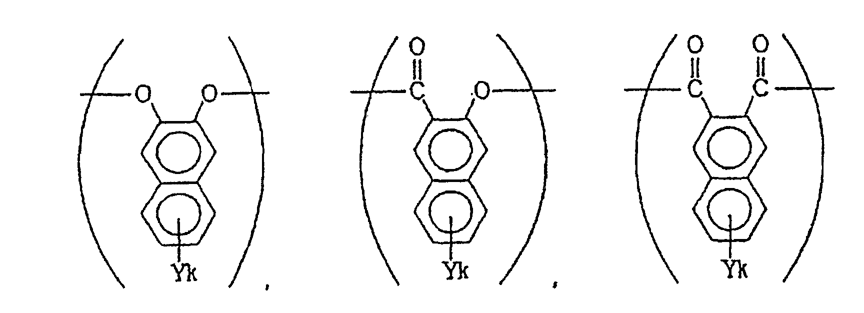 where Y is selected from the group consisting of hydrogen, halogen such as Cl and Br, methyl, ethyl, methoxy, ethoxy and phenyl groups; and k is 0 to 2.

Examples of the structure of the liquid crystalline polymer which exhibits a homeotropic orientation are given below. 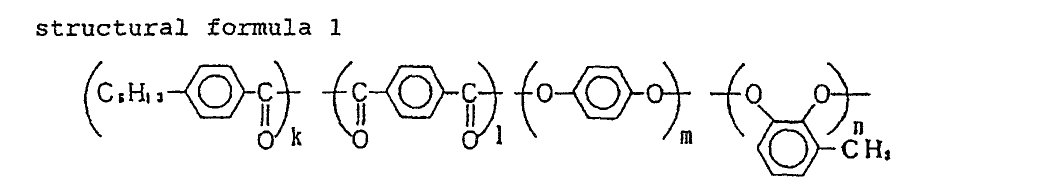 where m + n = k/2 + 1; k/l = 80/60 to 2/99, preferably 40/80 to 10/95; m/n = 100/0 to 0/100,.preferably 95/5 to 5/95; and k, 1, m and n represent, respectively, a molar ratio of component. 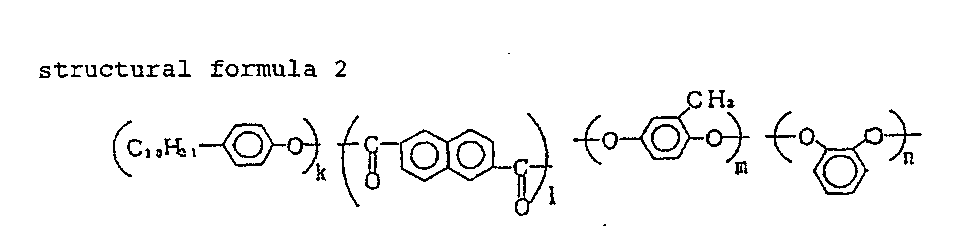 where 1 = k/2 + m + n; k/(m + n) = 80/60 to 2/99, preferably 40/80 to 10/95; m/n = 100/0 to 0/100, preferably 95/5 to 5/95; and k, 1, m and n represent, respectively, a molar ratio of component. 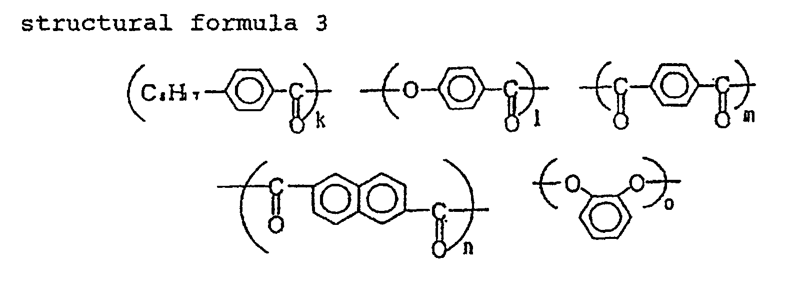 where o = k/2 + m + n; k/(m + n) = 80/60 to 2/99, preferably 40/80 to 10/95; m/n = 100/0 to 0/100, preferably 95/5 to 5/95; l/o = 20/10 to 0/10, preferably 15/10 to 5/10; and k, 1, m, n and o represent, respectively, a molar ratio of component. 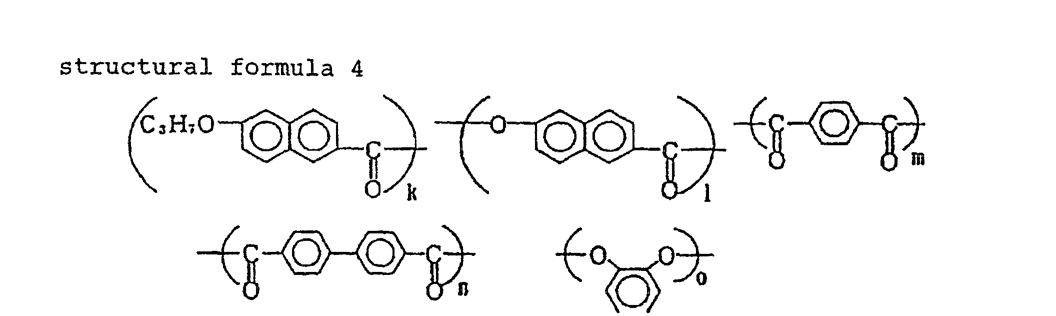 where o = k/2 + m + n; k/(m + n) = 80/60 to 2/99, preferably 40/80 to 10/95; m/n = 100/0 to 0/100, preferably 95/5 to 5/95; l/o = 20/10 to 0/10, preferably 15/10 to 5/10; and k, l, m, n and o represent, respectively, a molar ratio of component. 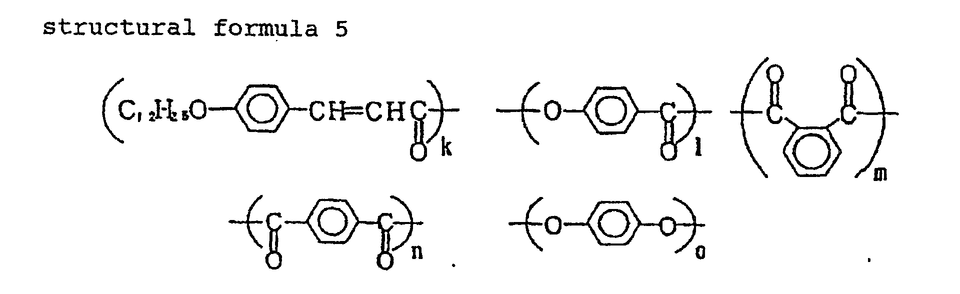 where o = k/2 + m + n; k/(m + n) = 80/60 to 2/99, preferably 40/80 to 10/95; m/n = 100/0 to 0/100, preferably 95/5 to 5/95; l/o = 20/10 to 0/10, preferably 15/10 to 5/10; and k, l, m, n and o represent, respectively, a molar ratio of component. 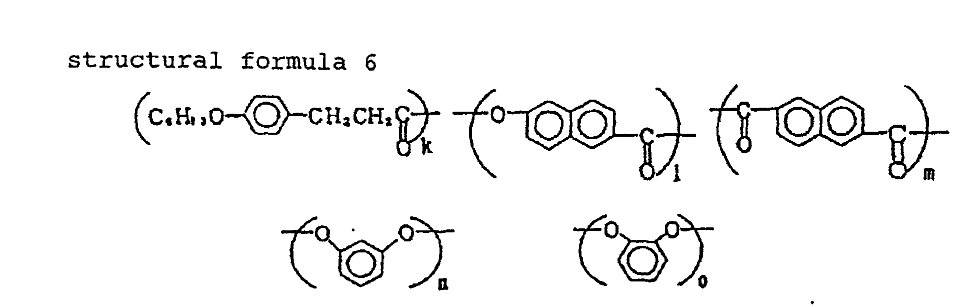 where n + o = k/2 + m; k/m = 80/60 to 2/99, preferably 40/80 to 10/95; n/o = 100/0 to 0/100, preferably 95/5 to 5/95; l/(n + o) = 20/10 to 0/10, preferably 15/10 to 5/10; and k, 1, m, n and o represent, respectively, a molar radio of component. 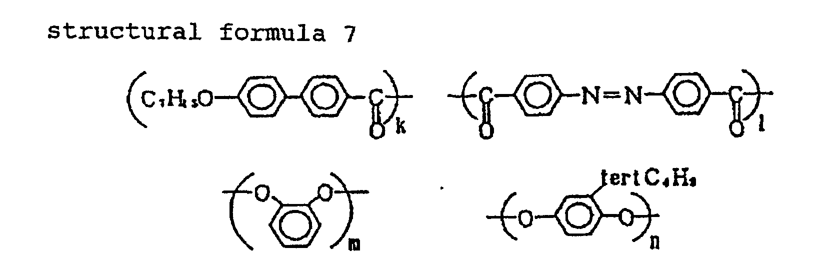 where m + n = k/2 + 1; k/1 = 80/60 to 2/99, preferably 40/80 to 10/95; m/n = 100/0 to 0/100, preferably 95/5 to 5/95; and k, l, m and n represent, respectively, a molar ratio of component. 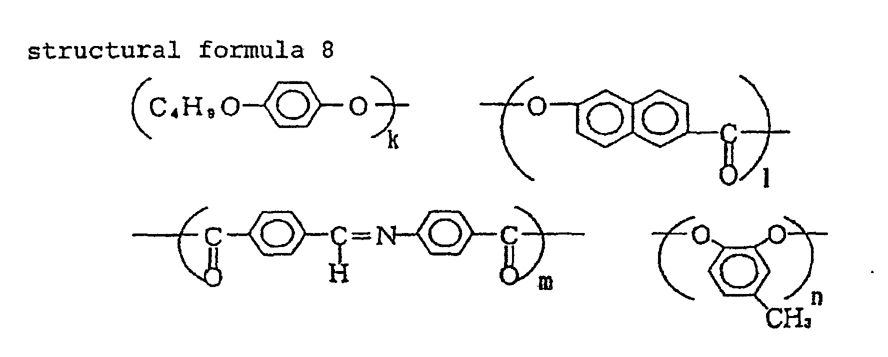 where m = k/2 + n; k/n = 80/60 to 2/99, preferably 40/80 to 10/95; l/m = 20/10 to 0/10, preferably 15/10 to 5/10; and k, l, m and n represent, respectively, a molar ratio of component. 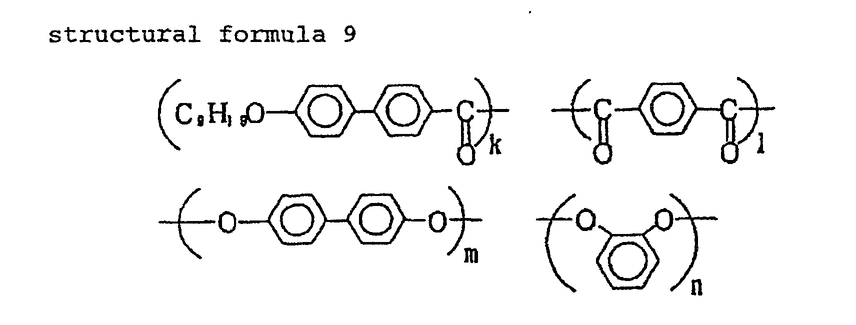 where l = k/2 + m + n; k/(m + n) = 80/60 to 2/99, preferably 40/80 to 10/95; m/n = 100/0 to 0/100, preferably 95/5 to 5/95; and k, l, m and n represent, respectively, a molar ratio of component. 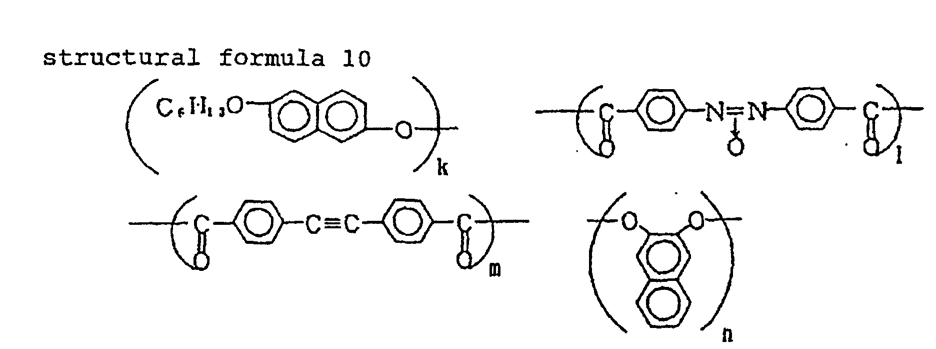 where l + m = k/2 + n; k/n = 80/60 to 2/99, preferably 40/80 to 10/95; l/m = 100/0 to 0/100, preferably 95/5 to 5/95; and k, l, m and n represent, respectively, a molar ratio of component. 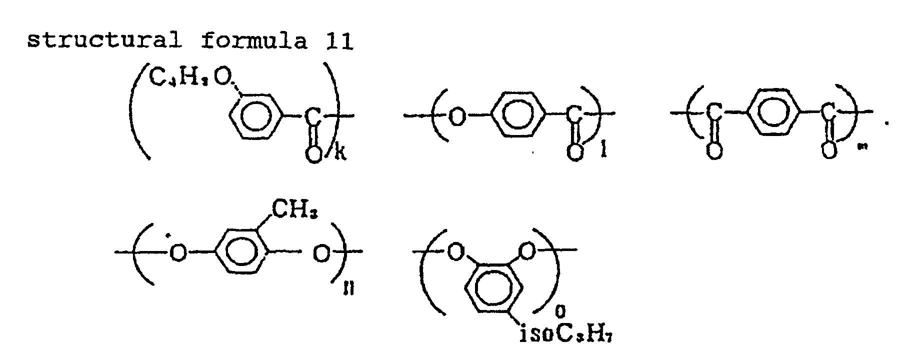 where n + o = k/2 + m; k/m = 80/60 to 2/99, preferably 40/80 to 10/95; n/o = 100/0 to 0/100, preferably 95/5 to 5/95; l/(n + o) = 20/10 to 0/10, preferably 15/10 to 5/10; and k, l, m, n and o represent, respectively, a molar ratio of component. 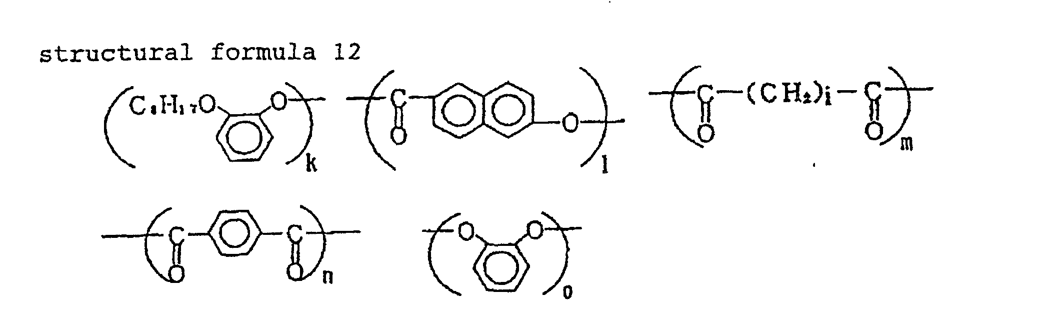 where m + n = k/2 + o; k/o = 80/60 to 2/99, preferably 40/80 to 10/95; m/n = 100/0 to 0/100, preferably 95/5 to 5/95; l/(m + n) = 20/10 to 0/10, preferably 15/10 to 5/10; i is an integer of 2 to 12; and k, 1, m, n and o represent, respectively, a molar ratio of component. 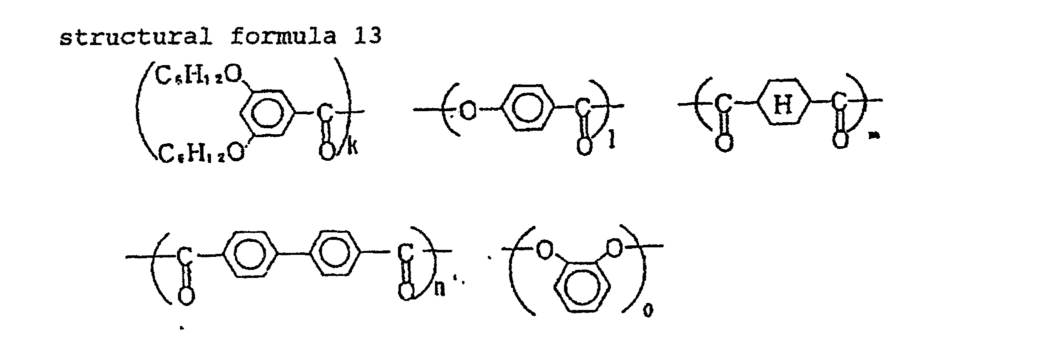 where o = k/2 + m + n; k/(m + n) = 80/60 to 2/99, preferably 40/80 to 10/95; m/n = 100/0 to 0/100, preferably 95/5 to 5/95; l/o = 20/10 to 0/10, preferably 15/10 to 5/10; and k, 1, m, n and o represent, respectively, a molar ratio of component. 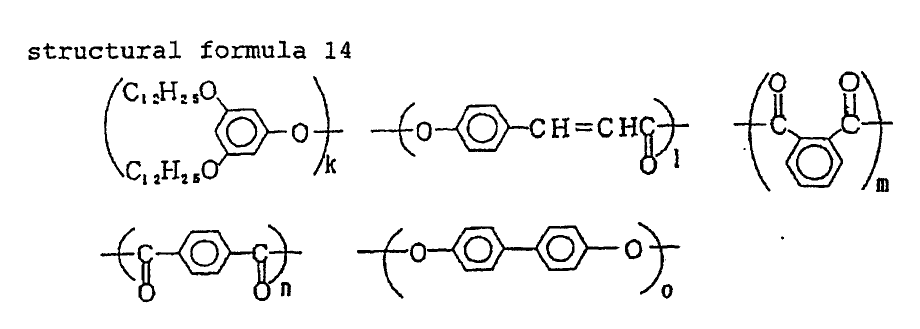 where m + n = k/2 + o; k/o = 80/60 to 2/99, preferably 40/80 to 10/95; m/n = 100/0 to 0/100, preferably 95/5 to 5/95; l/(m + n) = 20/10 to 0/10, preferably 15/10 to 5/10; and k, l, m, n and o represent, respectively, a molar ratio of component. 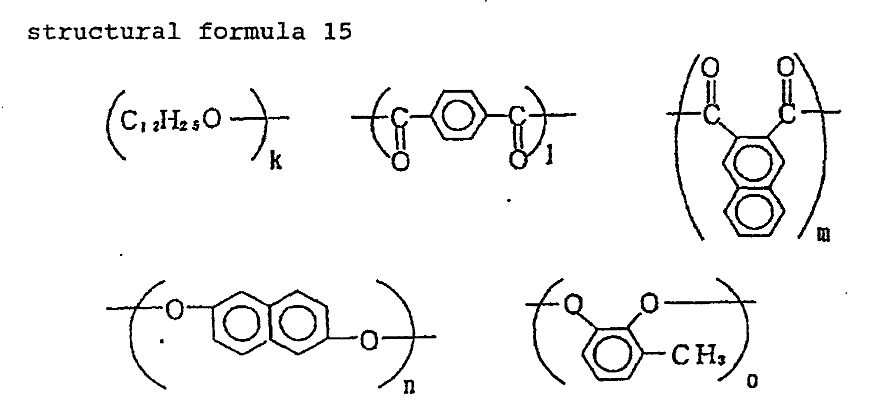 where 1 + m = k/2 + n + o; k/(n + o) = 80/60 to 2/99, preferably 40/80 to 10/95; l/m = 100/0 to 0/100, preferably 95/5 to 5/95; n/o = 100/0 to 0/100, preferably 95/5 to 5/95; and k, l, m, n and o represent, respectively, a molar ratio of component. 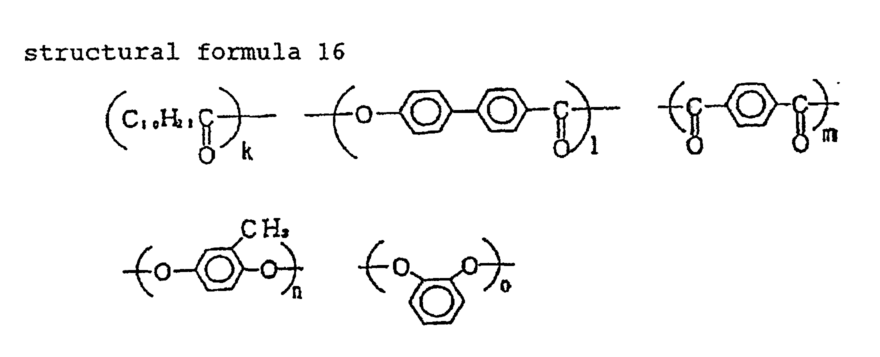 where n + o = k/2 + m; k/m = 80/60 to 2/99, preferably 40/80 to 10/95; n/o = 100/0 to 0/100, preferably 95/5 to 5/95; l/m = 20/10 to 0/10, preferably 15/10 to 5/10; and k, 1, m, n and o represent, respectively, a molar ratio of component. 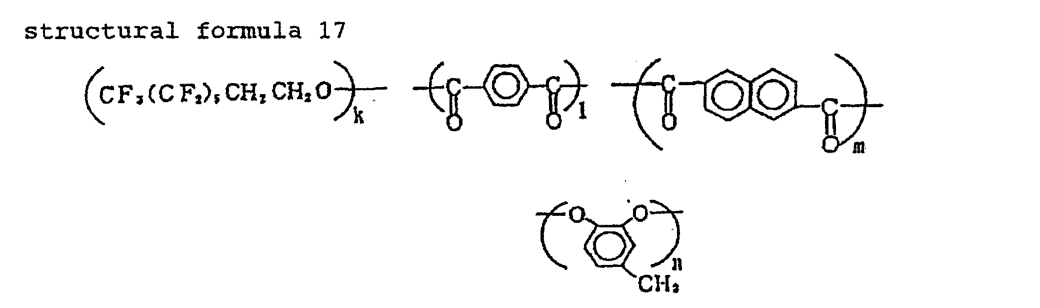 where 1 + m = k/2 + o; k/o = 80/60 to 2/99, preferably 40/80 to 10/95; l/m = 100/0 to 0/100, preferably 95/5 to 5/95; and k, 1, m, n and o represent, respectively, a molar.ratio of component. 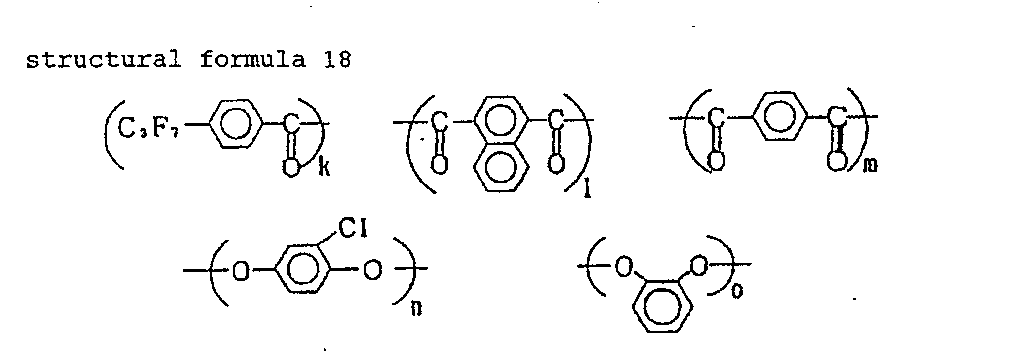 where n + o = k/2 + l + m; k/(l + m) = 80/60 to 2/99, preferably 40/80 to 10/95; l/m = 100/0 to 0/100, preferably 95/5 to 5/95; n/o = 100/0 to 0/100, preferably 95/5 to 5/95; and k, l, m, n and o represent, respectively, a molar ratio of component. 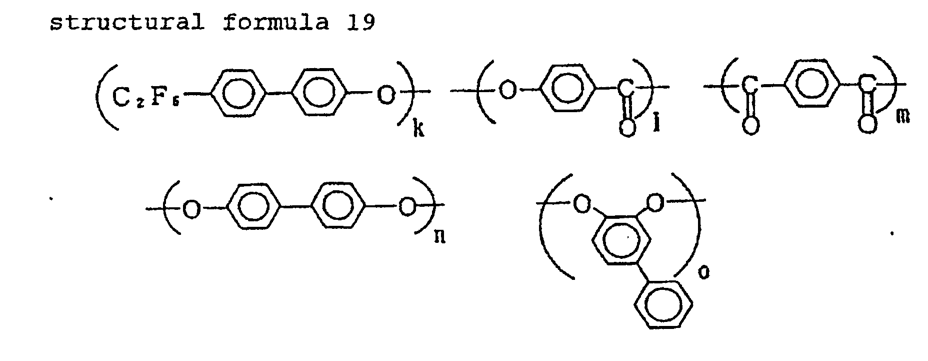 where m = k/2 + n + o; k/(n + o) = 80/60 to 2/99, preferably 40/80 to 10/95; n/o = 100/0 to 0/100, preferably 95/5 to 5/95; l/m = 20/10 to 0/10, preferably 15/10 to 5/10; and k, l, m, n and o represent, respectively, a molar ratio of component. 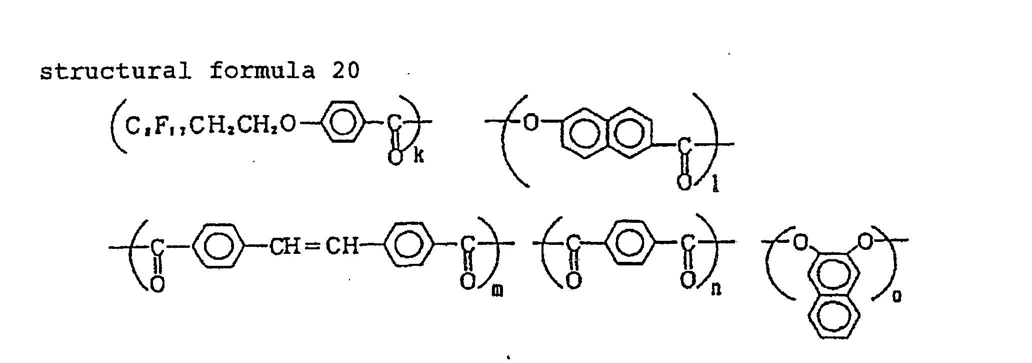 where o = k/2 + m + n; k/(m + n) = 80/60 to 2/99, preferably 40/80 to 10/95; m/n = 100/0 to 0/100, preferably 95/5 to 5/95; l/m = 20/10 to 0/10, preferably 15/10 to 5/10; and k, 1, m, n and o represent, respectively, a molar ratio of component. 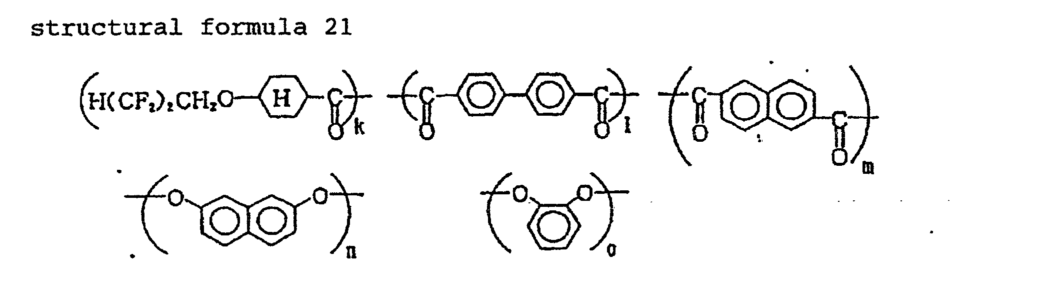 where n + o = k/2 + 1 + m; k/(l + m) = 80/60 to 2/99, preferably 40/80 to 10/95; l/m = 100/0 to 0/100, preferably 95/5 to 5/95; n/o = 100/0 to 0/100, preferably 95/5 to 5/95; and k, l, m, n and o represent, respectively, a molar ratio of component. 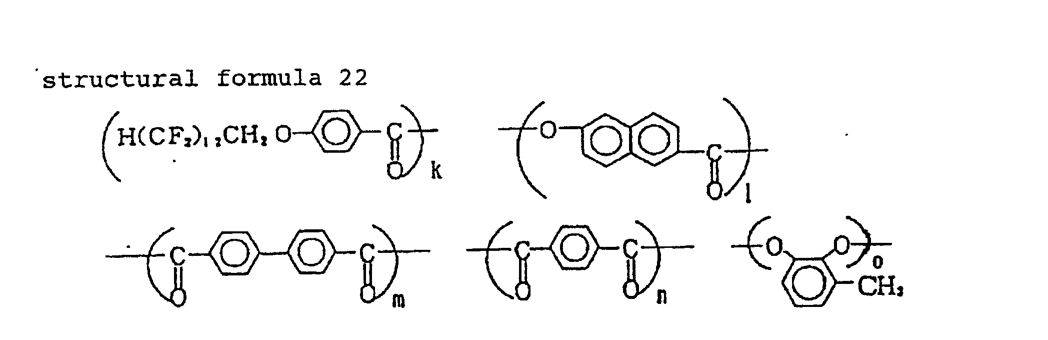 where o = k/2 + m + n; k/(m + n) = 80/60 to 2/99, preferably 40/80 to 10/95; m/n = 100/0 to 0/100, preferably 95/5 to 5/95; l/o = 20/10 to 0/10, preferably 15/10 to 5/10; and k, l, m, n and o represent, respectively, a molar ratio of component. 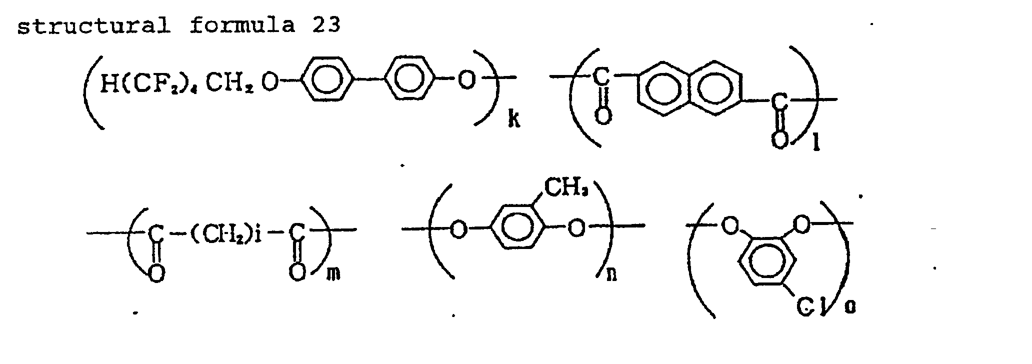 where l + m = k/2 + n + o; k/(n + o) = 80/60 to 2/99, preferably 40/80 to 10/95; l/m = 100/0 to 0/100, preferably 95/5 to 5/95; n/o = 100/0 to 0/100, preferably 95/5 to 5/95; i is an integer of 2 to 12; and k, l, m, n and o represent, respectively, a molar ratio of component. 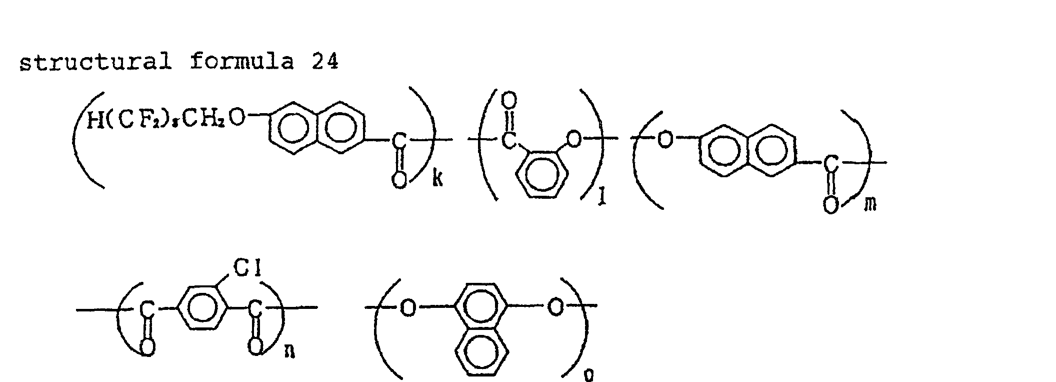 where o = k/2 + n; k/n = 80/60 to 2/99, preferably 40/80 to 10/95; l/m = 100/0 to 0/100, preferably 95/5 to 5/95; (l + m)/o = 20/10 to 0/10, preferably 15/10 to 5/10; and k, l, m, n and o represent, respectively, a molar ratio of component. 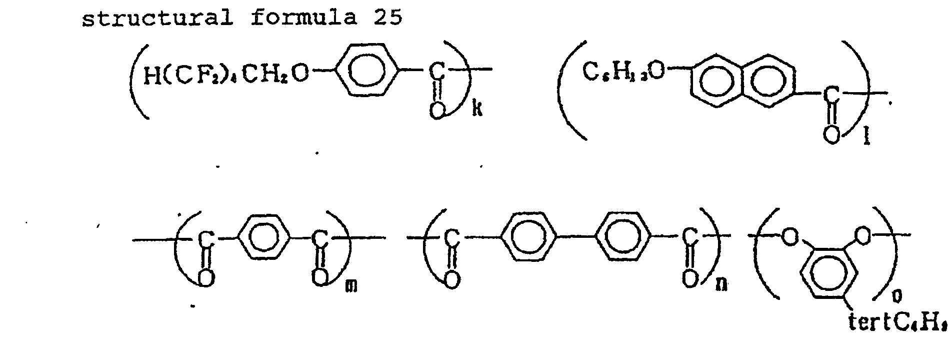 where o = k/2 + 1/2 + m + n; (k + l)/(m + n) = 80/60 to 2/99, preferably 40/80 to 10/95; k/l= 100/0 to 0/100, preferably 90/10 to 10/90; m/n = 100/0 to 0/100, preferably 95/5 to 5/95; and k, l, m, n and o represent, respectively, a molar ratio of component. 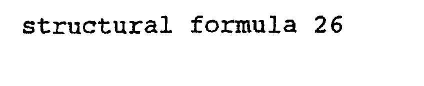 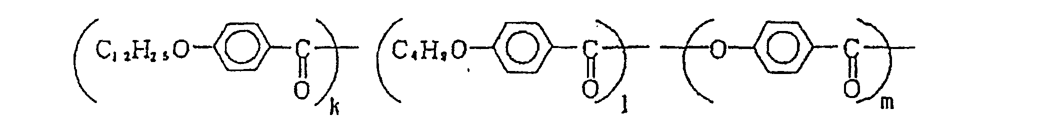 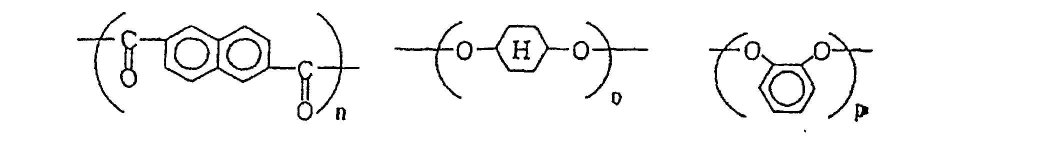 where o + p = k/2 + 1/2 + n; (k + 1)/n = 80/60 to 2/99, preferably 40/80 to 10/95; k/l = 100/0 to 0/100, preferably 90/10 to 10/90; o/p = 100/0 to 0/100, preferably 95/5 to 5/95; m/n = 20/10 to 0/10, preferably 15/10 to 5/10; andk, l, m, n, o and p represent,

Particularly, the liquid crystalline polyesters of the above structural formulae 1, 3, 4, 9, 11, 16, 20, 22, 23 and 25 are preferred.

The molecular weight of the liquid crystalline polymer (alone) exhibiting the homeotropic orientation and exemplified above is preferably in the range of 0.04 to 1.5, more preferably 0.06 to 1.0, in terms of an inherent viscosity thereof as determined in any of various solvents, say, a mixed phenol/tetrachloroethane solvent (60/40 weight ratio), at 30°C. An inherent viscosity smaller than 0.04 is not desirable because the mechanical strength of the optically anisotropic film (A) will become low. If the inherent viscosity is larger than 1.5, there is a fear that the homeotropic orientability may be lost and there also is a fear that the viscosity in the state of liquid crystal may become too high, which may lead to an increase of the time required for the homeotropic orientation even if the same orientation is realized. Further, if the optically anisotropic film (A) is formed using a liquid crystalline polymer larger than 1.5 in inherent viscosity, the nematic hybrid orientation structure may be unobtainable.

How to prepare the liquid crystalline polymer is not specially limited. It can be prepared by a polymerization method which is publicly known in the field concerned. For example, in the case of a liquid crystalline polyester, it can be prepared by a melt polymerization method or an acid chloride method using an acid chloride of a corresponding dicarboxylic acid.

In preparing the liquid crystalline polymer, the monofunctional structural unit is fed to the polymerization reaction as a monoalcohol, a monocarboxylic acid compound, or a functional derivative thereof, such as an acetylated derivative or a halide, as noted previously. The content of the monofunctional structural unit in the liquid crystalline polymer, more specifically the liquid crystalline polyester, is in the range of 2/201 to 80/240, preferably 10/205 to 20/220, in the components exclusive of hydroxycarboxylic acid structural units. If the content of the monofunctional structural unit is outside this range, the liquid crystalline polymer may not exhibit the homeotropic orientation. There also is a fear that the nematic hybrid orientation may not be formed when to be formed. The content of the monofunctional structural unit is proportional to the amount of monomer used.

. In the present invention, as explained above, the liquid crystalline polymer which exhibits the homeotropic orientation is used as the polymer alone or as a composition containing at least one such liquid crystalline polymer. The composition may contain a liquid crystalline polymer exhibiting any other orientation than the homeotropic orientation or a non-crystalline polymer not exhibiting any liquid crystalline property. Even such a composition is employable in the invention insofar as it possesses the foregoing properties.

By using the following composition as the liquid crystalline polymer which exhibits an optically positive uniaxial property:
① a composition comprising plural kinds of liquid crystalline polymers exhibiting the homeotropic orientation, or
② a composition comprising at least one kind of a liquid crystalline polymer exhibiting the homeotropic orientation and a liquid crystalline polymer (alone or as a composition) exhibiting an orientation other than the homeotropic orientation and/or a non-crystalline polymer,

there accrue the following advantages:
① By adjusting the composition ratio it is possible to control an optical parameter, more specifically, the average tilt angle in the nematic hydbrid orientation, of the optically anisotropic film (A), and
② it is possible to stabilize the nematic hybrid orientation.

In the case of using the liquid crystalline polymer as a composition, it is desirable for the composition to contain 5 wt% or more of the homeotropic-orientable liquid crystalline polymer. An amount there of smaller than 5 wt% may result in the nematic hybrid orientation being unobtainable.

As the polymer (or a composition) which may be added to the homeotropic-orientable liquid crystalline polymer there may be used a non-crystalline polymer, but from the standpoint of compatibility with the homeotropic-orientable liquid crystalline polymer it is desirable to also employ a liquid crystalline polymer. Examples are main chain type liquid crystalline polymers such as polyesters, polyimides, polyamides, polyesters, polycarbonates, and polyester imides. Side chain type liquid crystalline polymers are also employable such as polyacrylates, polymethacrylates, polysiloxanes, and polymalonates. There is no special limitation if only the liquid crystalline polymers used are compatible with the homeotropic-orientable liquid crystalline polymer. Most preferred are liquid crystalline polyesters each having an ortho-substituted aromatic unit in the main chain thereof as exemplified previously (formula 4). Further, no matter what orientation these liquid crystalline polymers may exhibit, for example, homogeneous orientation, uniform tilt orientation, or any other orientation, it does not matter. Above all, liquid crystalline polymer exhibiting homogeneous orientation, especially liquid crystalline polyesters exhibiting the said orientation, are preferred. The judgtment of homogeneous orientation is performed using a substrate such as any of those exemplified previously which substrate has not been subjected to a surface treatment such as silicon treatment, rubbing treatment, or uniaxial stretching, as is the case with the judgment of homeotropic orientation. A liquid crystalline polymer layer is formed on the substrate, and on the basis of the stateof orientation thereof there is made judgment as to whether the liquid crystalline polymer exhibits homogeneous orientation.

The following are concrete structural examples of . liquid crystalline polyesters which exhibit homogeneous orientation: 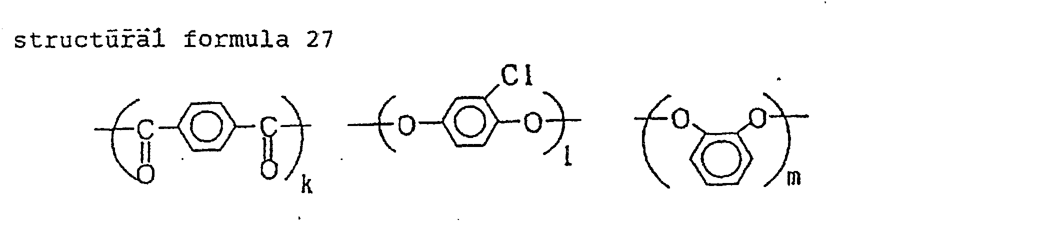 where k = l + m; l/m = 80/20 to 20/80, preferably 75/25 to 25/75; and k, l and m represent, respectively, a molar component. 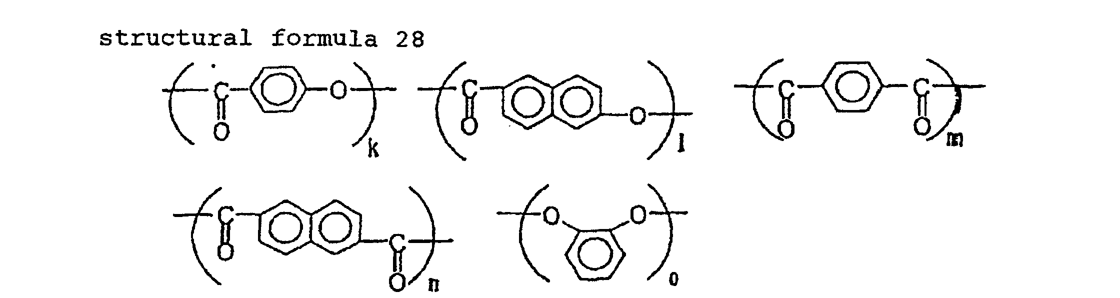 where o = m + n; (k + l)/o = 20/10 to 0/10, preferably 15/10 to 0/10; m/n = 100/0 to 0/100, preferably 98/2 to 2/98; and k, 1, m, n and o represent, respectively, a molar ratio of component. 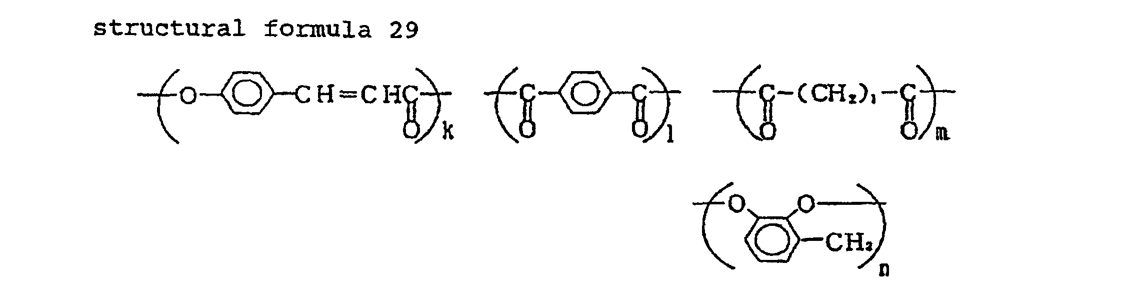 where n = l + m; k/m = 20/10 to 0/10, preferably 15/10 to 0/10; and k, l, m and n represent, respectively, a molar ratio of component. 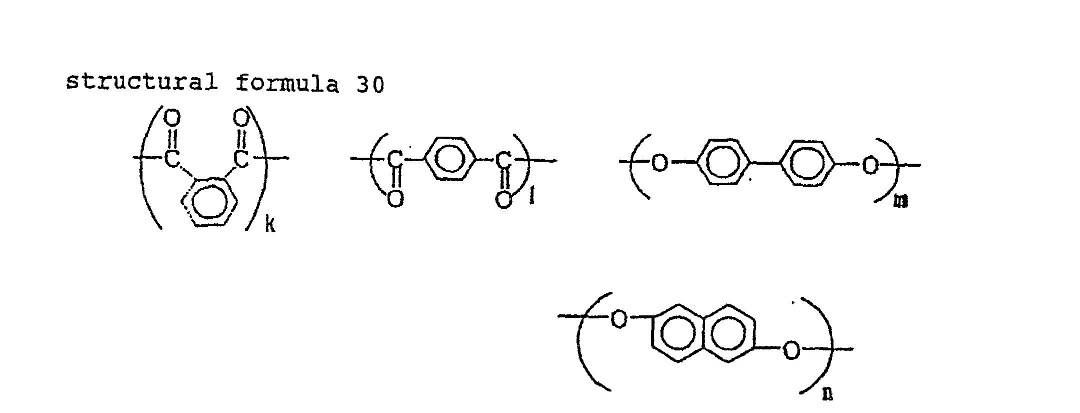 where k + l = m + n; k/l = 100/0 to 0/100, preferably 95/5 to 5/95; m/l = 100/0 to 0/100, preferably 95/5 to 5/95; and k, 1, m and n represent, respectively, a molar ratio of component. 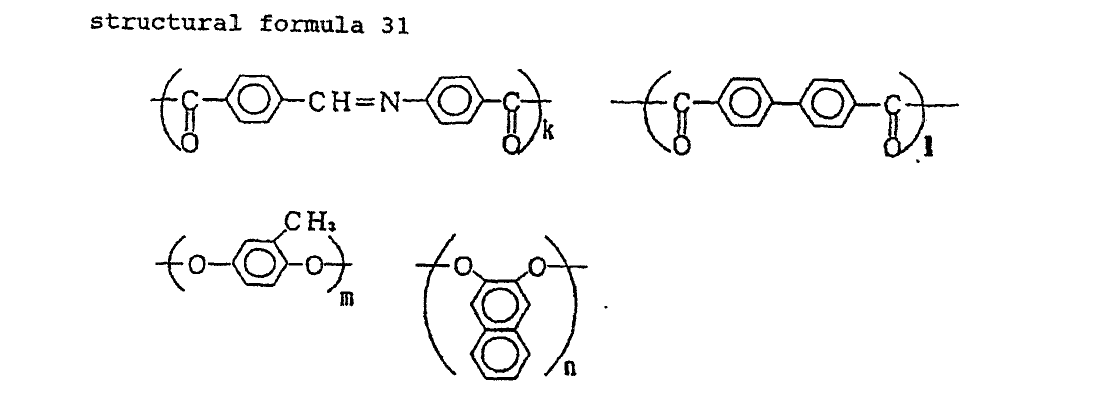 where k + 1 = m + n; k/l = 100/0 to 0/100, preferably 95/5 to 5/95; m/l = 100/0 to 0/100, preferably 95/5 to 5/95; and k, 1, m and n represent, respectively, a molar ratio of component. 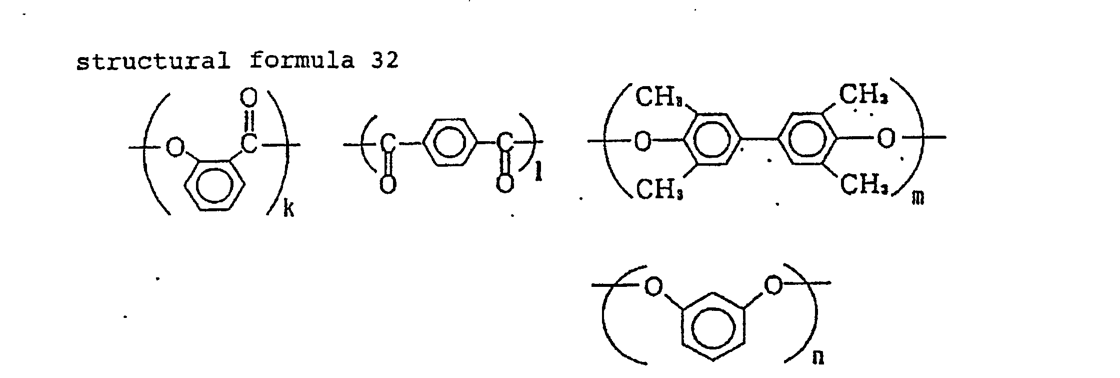 where l = m + n; k/l = 15/10 to 0/10, preferably 10/10 to 0/10; m/n = 100/0 to 0/100, preferably 95/5 to 5/95; and k, 1, m and n represent, respectively, a molar ratio of component. 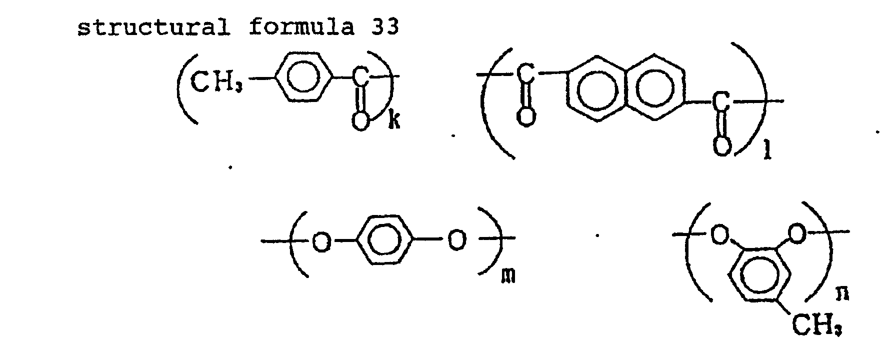 where m + n = k/2 + 1; k/l = 40/80 to 0/100, preferably 20/90 to 0/100; m/n = 100/0 to 0/100, preferably 95/5 to 5/95; and k, l, m and n represent, respectively, a molar ratio of component. 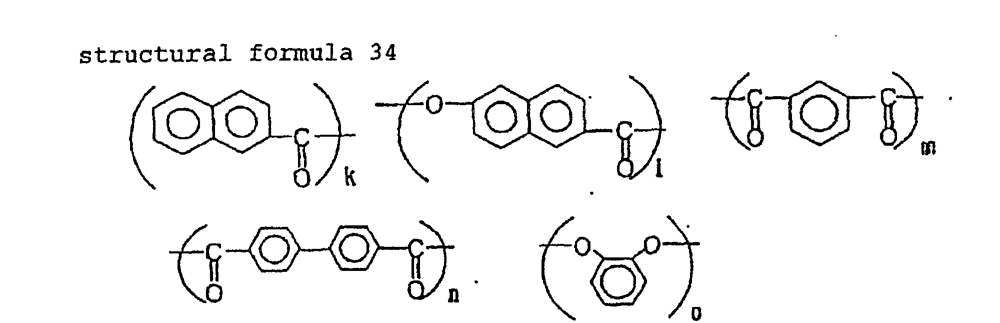 where o = k/2 + m + n; k/(m + n) = 40/80 to 0/100, preferably 20/90 to 0/100; m/n = 100/0 to 0/100, preferably 95/5 to 5/95; l/o = 20/10 to 0/10, preferably 15/10 to 5/10; and k, l, m, n and o represent, respectively, a molar ratio of component. 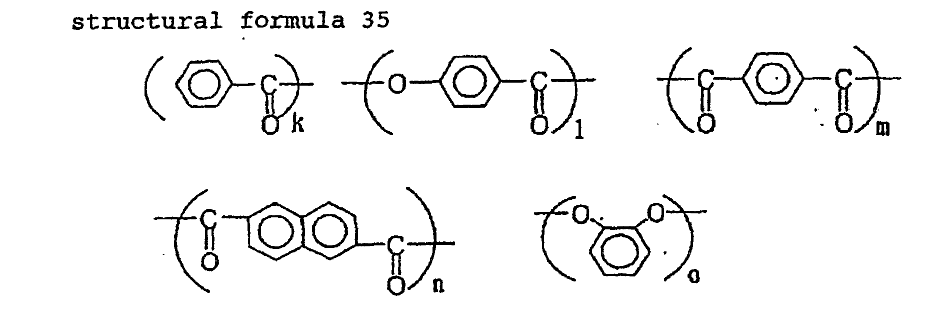 where o = k/2 + m + n; k/(m + n) = 40/80 to 0/100, preferably 20/90 to 0/100; m/n = 100/0 to 0/100, preferably 95/5 to 5/95; l/o = 20/10 to 0/10, preferably 15/10 to 5/10; and k, l, m, n and o represent, respectively, a molar ratio of component. 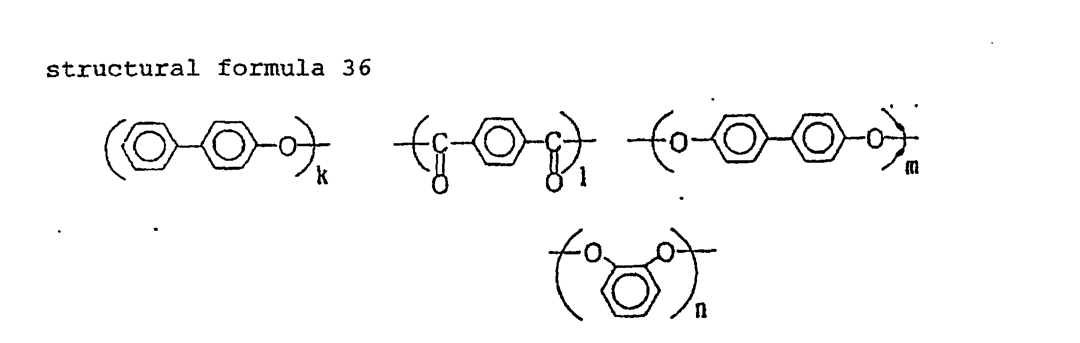 where 1 = k/2 + m + n; k/(m + n) = 40/80 to 0/100, preferably 20/90 to 0/100; m/n = 100/0 to 0/100, preferably 95/5 to 5/95; and k, 1, m and n represent, respectively, a molar ratio of component. 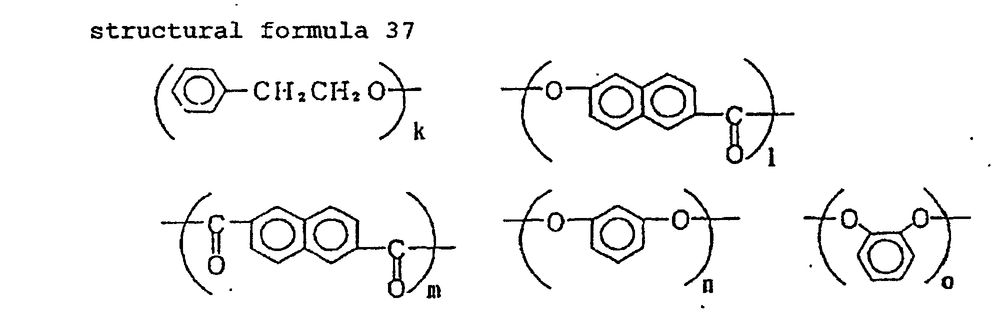 where m = k/2 + n + o; k/(n + o) = 40/80 to 0/100, preferably 20/90 to 0/100; n/o = 100/0 to 0/100, preferably 95/5 to 5/95; l/m = 20/10 to 0/10, preferably 15/10 to 5/10; and k, 1, m, n and o represent, respectively, a molar ratio of component. 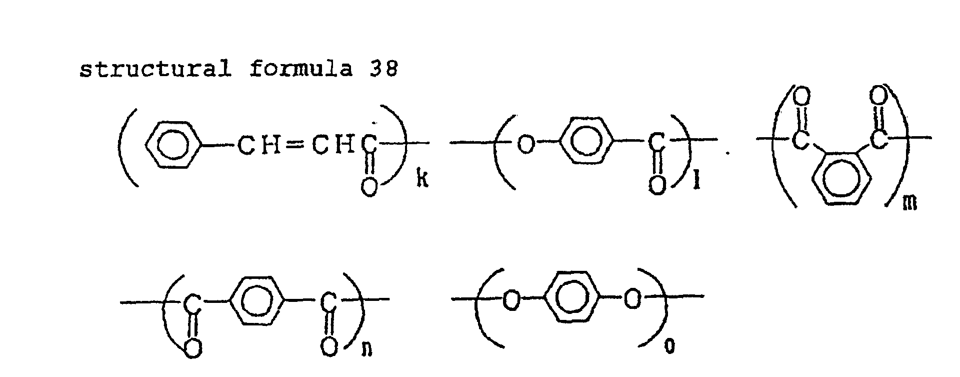 where o = k/2 + m + n; k/(m + n) = 40/80 to 0/100, preferably 20/90 to 0/100; m/n = 100/0 to 0/100, preferably 95/5 to 5/95; l/o = 20/10 to 0/10, preferably 15/10 to 5/10; and k, l, m, n and o represent, respectively, a molar ratio of component. 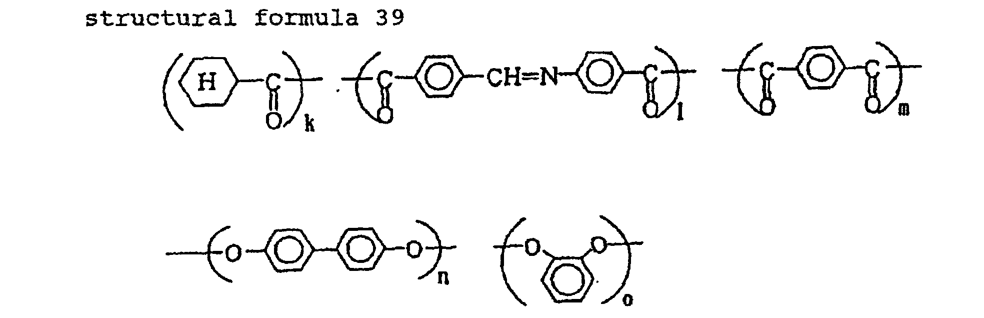 where n + o = k/2 + 1 + m; k/(l + m) = 40/80 to 0/100, preferably 20/90 to 0/100; l/m = 100/0 to 0/100, preferably 95/5 to 5/95; n/o = 100/0 to 0/100, preferably 95/5 to 5/95; and k, 1, m, n and o represent, respectively, a molar ratio of component.

The molecular weight of the liquid crystalline polymer exhibiting homogeneous orientation and exemplified above is preferably in the range of 0.05 to 3.0, more preferably 0.07 to 2.0, in terms of an inherent viscosity as determined in any of various solvents, say, a mixed phenol/tetrachloroethane solvent (60/40 weight ratio), at 30°C. If the inherent viscosity is lower than 0.05, the mechanical strength of the film (A) may be deteriorated in the case of using the polymer in question as a composition together with the homeotropic-orientable liquid crystalline polymer. If the inherent viscosity is higher than 3.0, there is a fear that the nematic hybrid orientation may be impaired or the viscosity in the formation of liquid crystal may become too high, with consequent increase of the time required for orientation.

How to prepare the liquid crystalline polymers is not specially limited. Liquid crystalline polymers employable in the present invention can be prepared by polymerization methods which are known in the field concerned. For example, polyesters can be prepared by a melt polymerization method or an acid chloride method using acid chlorides of corresponding dicarboxylic acids.

The following description is now provided about how to prepare the optically anisotropic film (A). It is desirable to go through manufacturing steps using an orienting substrate to be described below.

Reference will first be made to an orienting substrate.

For obtaining the nematic hybrid orientation using a liquid crystalline polymer which exhibits a optically positive uniaxial property, it is desirable to sandwich a layer of the liquid crystalline polymer vertically with different interfaces. If the polymer layer is sandwiched vertically in between the same interfaces, the orientations at both upper and lower interfaces of the polymer layer become the same, thus making it difficult to obtain the nematic hybrid orientation.

A concrete mode utilizes a single orienting substrate and an air interface so that the lower interface of the liquid crystalline polymer layer comes into contact with the orienting substrate and the upper interface thereof comes into contact with the air. Upper and lower orienting substrates of different interfaces are also employable, but in point of manufacturing process it is desirable to use a single orienting substrate and an air interface.

It is desirable for the orienting substrate to be anisotropic so that the direction of inclination of the liquid crystal molecule (projection of directors to the orienting substrate) can be defined. If the orienting substrate used cannot define a tilting direction of liquid crystal at all, there will be obtained only an orientation form which is tilted in disorderly directions (projected vectors of directors to the substrate become disorderly).

As orienting substrates employable in the present invention, those having an intra-plane anisotropy are preferred. Examples are plastic film substrates and uniaxially stretched plastic film substrates of polyimides, polyamide-imides, polyamides, polyether imides, polyether ether ketones, polyether ketones, polyketone sulfides, polyether sulfones, polysulfones, polyphenylene sulfides, polyphenylene oxides, polyethylene terephthalates, polybutylnene, polyethylene naphthalates, polyacetals, polycarbonates, polyarylates, acrylic resins, polyvinyl alcohols, polypropylenes, cellulosic plastics, epoxy resins, and phenolic resins, as well as metallic substrates such as aluminum, iron and copper substrates having slits in the surfaces thereof, and glass substrates such as alkali glass, borosilicate glass and flint glass substrates having slit-like etched surfaces.

In the present invention there may be used rubbed plastic film substrates obtained by rubbing the above plastic film substrates, as well as rubbed thin plastic films such as rubbed polyimide films and rubbed polyvinyl alcohol films. Further, the substrates exemplified above may have obliquely vapor-deposited films of silicon oxide.

Among the various orienting substrates exemplified above, preferred examples for forming the nematic hybrid orientation of the liquid crystalline polymer are substrates each having a rubbed polyimide film, rubbed polyimide films, rubbed polyether ether ketone substrates, rubbed polyether ketone substrates, rubbed polyether sulfone substrates, rubbed polyphenylene sulfide substrates, rubbed polyethylene terephthalate substrates, rubbed polyethylene naphthalate substrates, rubbed polyarylate substrates, and cellulosic plastic substrates.

In the optically anisotropic film (A), as noted previously, the director-film surface angle of the positively uniaxial liquid crystalline polymer differs between the upper and lower surfaces of the film. At the film surface on the orienting substrate side, the said angle can be adjusted to either the range of 0° to 50° or the range of 60° to 90° according to the method of orienting treatment adopted and the type of the liquid crystalline polymer used. In point of manufacturing process it is desirable that the director-film surface angle of the liquid crystalline polymer in the vicinity of the film interface which is in contact with the orienting substrate used be adjusted to an angle falling under the range of 0° to 50°.

The optically anisotropic film (A) used in the present invention is obtained by applying the liquid crystalline polymer uniformly onto the orienting substrate and then going through a uniformly orienting step and an orientation fixing step. Usually, the liquid crystalline polymer exhibiting an optically positive uniaxial property is applied onto the orienting substrate in a dissolved state in any of various solvents or in a melted state. The former method, that is, applying the liquid crystalline polymer as a solution in a solvent, is preferred in point of manufacturing process.

A suitable solvent for dissolving the positively uniaxial liquid crystalline polymer depends on the kind (say, composition ratio) of the liquid crystalline polymer used, but usually any of the following solvents is used: halogenated hydrocarbons such as chloroform, dicloromethane, carbon tetrachloride, dichloroethane, tetrachloroethane, trichloroethylene, tetrachloroethylene, chlorobenzene, and orthodichlorobenzene, phenols such as phenol and parachlorophenol, aromatic hydrocarbons such as benzene, toluene, xylene, methoxybenzene, and 1,2-dimethoxybenzene, as well as acetone, ethyl acetate, tert-butyl alcohol, glycerin, ethylene glycol, triethylene glycol, ethylene glycol monomethyl ether, diethylene glycol dimethyl ether, ethyl cellosolve, butyl cellosolve, 2-pyrrolidone, N-methyl-2-pyrrolidone, pyridine, triethylamine, tetrahydrofuran, dimethylformamide, dimethylacetamide, dimethyl sulfoxide, acetonitrile, butyronitrile, carbon disulfide, and mixtures thereof such as, for example, mixed solvents of halogenated hydrocarbons and phenols.

The concentration of the solution used depends on the solubility of the liquid crystalline polymer used and the thickness of the optically anisotropic film (A) to be obtained, but is usually in the range of 3 to 50 wt%, preferably 7 to 30 wt%.

After adjustment to a desired concentration with use of the solvent, the solution is applied onto the orienting substrate by a suitable method such as, for example, spin coating, roll coating, die coating, printing, dipping/pulling-up, or curtain coating.

After the application, the solvent is removed, allowing a layer of the liquid crystalline polymer having a uniform thickness to be formed on the orienting substrate. How to remove the solvent is not specially limited. Any method may be adopted insofar as the solvent can mostly be removed and the layer of the positively uniaxial liquid crystalline polymer does not flow or drop. Usually, the solvent is removed by drying at room temperature, drying in a drying oven, or by spraying warm or hot air.

This coating and drying stage intends to form a uniform layer of the liquid crystalline polymer on the substrate, with the nematic hybrid orientation of the liquid crystalline polymer being not formed yet. The nematic hybrid orientation of monodomain is completed by a heat treatment which follows.

In forming the nematic hybrid orientation by heat treatment, the lower the viscosity of the positively uniaxial liquid crystalline polymer, the better, for promoting the orientation induced by an interfacial effect. Therefore, the higher the heat treatment temperature, the more desirable. In certain liquid crystalline polymers, the average tilt angle differs depending on the heat treatment temperature. In this case, it is necessary to set a heat treatment temperature suitable for obtaining a desired average tilt angle. For example, when there occurs the necessity of performing the heat treatment at a relatively low temperature for obtaining an orientation of a certain tilt angle, the low temperature keeps the liquid crystalline polymer high in viscosity, resulting in that the time required for orientation becomes longer. In such a case, it is effective to adopt a method wherein heat treatment is once conducted at a high temperature and thereafter the heat treatment temperature is dropped to a desired level stepwise or gradually. Anyhow, it is desirable to perform the heat treatment at a temperature above the glass transition point of the liquid crystalline polymer used in accordance with characteristics of the polymer. The heat treatment temperature is preferably in the range of 50°C to 300°C, more preferably 100°C to 260°C.

The heat treatment time necessary for the positively uniaxial liquid crystalline polymer to exhibit a satisfactory orientation on the orienting substrate depends on the kind (say, composition ratio) of the liquid crystalline polymer used and the heat treatment temperature adopted, but is preferably in the range of 10 seconds to 120 minutes, more preferably 30 seconds to 60 minutes. If the heat treatment time is shorter than 10 seconds, there is a fear that the orientation obtained may be unsatisfactory. Also, a longer time than 120 minutes is not desirable because the productivity may be deteriorated.

In this way, in the state of liquid crystal, it is possible to obtain a nematic hybrid orientation which is uniform throughout the whole surface of the orienting substrate. In the heat treatment there may be utilized a magnetic field or an electric field for inducing the nematic hybrid orientation of the liquid crystalline polymer. However, if a magnetic or electric field is applied during heat treatment, a uniform field force is exerted on the liquid crystalline polymer, so that the directors of the liquid crystal are apt to face in a certain direction. In other words, it is impossible to obtain the nematic hybrid orientation defined in the invention. If the field force is removed after an orientation other than the nematic hybrid orientation, such as homeotropic, homogeneous, or uniform tilt orientation, is once formed, it will be possible to obtain a thermally stable nematic hybrid orientation. But there will be no special merit in point of process.

The nematic hybrid orientation structure thus formed in the state of liquid crystal of the liquid crystalline polymer exhibiting an optically positive uniaxial property can be fixed, without impairing the uniformity of the orientation, by cooling to a temperature below the liquid crystal transition point of the liquid crystalline polymer.

Generally, in the case of using a liquid crystalline polymer which has a smectic phase or a crystal phase in a lower temperature region than the nematic phase, the nematic orientation in the state of liquid crystal may be destroyed by cooling. The liquid crystalline polymer used in the present invention, which exhibits an optically positive uniaxial property, essentially possesses the following properties:
① Does not have any smectic or crystal phase at temperatures below the nematic phase temperature region.
② Even if the liquid crystalline polymer has a smectic or crystal phase latently, the smectic or crystal phase does not appear at the time of cooling.
③ In the working temperature range of the optically anisotropic film, the liquid crystalline polymer does not exhibit fluidity nor any change in its orientation form even with an external field or force applied thereto.

Thus, there will not occur the destruction of the orientation form caused by a phase transition to the smectic phase or crystal phase. Besides, the nematic hybrid orientation of a completely monodomain can be fixed.

The foregoing cooling temperature is not specially limited if only it is below the liquid crystal transition temperature of the liquid crystalline polymer used. For example, by cooling at a temperature 10°C lower than the liquid crystal transition point, it is possible to fix a uniform nematic hybrid orientation.

Means for cooling is not specially limited. The orientation formed can be fixed by merely transferring the liquid crystalline polymer from within the heating atmosphere in the heat treatment step into an atmosphere held at a temperature below the liquid crystal transition point of the polymer, for example, into a room temperature atmosphere. For enhancing the production efficiency there may be adopted a forced cooling such as air or water cooling, or slow cooling. In certain liquid crystalline polymers, however, the average tilt angle somewhat differs, depending on the cooling rate. When there occurs the necessity of using such a liquid crystalline polymer and controlling the average tilt angle strictly, it is desirable that appropriate cooling conditions be established in carrying out the cooling operation.

The following description is now provided about controlling the angle in the film thickness direction of the nematic hybrid orientation. In the optically anisotropic film (A), the absolute value of the director-film surface angle of the liquid crystalline polymer in the vicinity of the upper or lower interface of the film is in the range of 0° to 50° at one of the upper and lower surfaces of the film and is in the range of 60° to 90° at the opposite surface. Control can be made to a desired angle by selecting a suitable kind (say, composition) of a liquid crystalline polymer to be used, a suitable orienting substrate and suitable conditions for heat treatment. Even after fixing the nematic hybrid orientation, control can be made to a desired angle by adopting a suitable method such as a method of scraping the film surface uniformly or a method of dipping the film in a solvent to melt the film surface uniformly. In this case, a suitable solvent is selected according to the kind (say, composition) of the liquid crystalline polymer used and that of the orienting substrate used.

In the manner described above it is possible to obtain the optically anisotropic film (A) having the nematic hybrid orientation structure.

Reference will now be made to the light diffusing layer (B).

The light diffusing layer (B) used in the present invention is not specially limited insofar as it possesses the property of diffusing incident light isotropically or anisotropically.

For example, the light diffusing layer (B) is constituted by a light diffusing plastic sheet, plastic film, plastic substrate, or substrate other than plastic substrate. Also employable is a light diffusing sheet, film or substrate with a liquid crystal phase fixed thereto such as nematic, chiralnematic, cholesteric, smectic, or chiralsmectic phase. It is optional whether these sheets, films and substrates have a self-supporting property or do not have such a property. In the case of a sheet, film or substrate not having a self-supporting property, it should be held on a film or substrate having a self-supporting property and the thus-combined body is required not to impair the light diffusing property. There may be adopted a method wherein a compound or composition capable of forming a light diffusing layer is applied in a melted state or as a solution onto the optically anisotropic film (A) and then, if necessary, is subjected to a certain treatment using an electric or magnetic field or a polarized light irradiation, to form the light diffusing layer (B). But it is necessary that such a melt or solution application be carried out while taking care so as not to induce disturbance of the nematic hybrid orientation in the optically anisotropic film (A) or deterioration in strength of the film.

As examples of the light diffusing layer (B) are mentioned plastic sheets, films and substrates each comprising a resin matrix and particles dispersed therein which particles have a refractive index different from that of the matrix. More concrete examples include plastic films and substrates with inorganic or organic fine particles, air-containing hollow fine particles or liquid-containing microcapsules dispersed in such resin matrices as polyimides, polyamide-imides, polyamides, polyether imides, polyethr ether ketones, polyether ketones, polyketone sulfides, polyether sulfones, polysulfones, polyphenylene sulfides, polyphenylene oxides, polyethylene terephthalates, polybutylene terephthalates, polyethylene naphthalates, polyacetals, polycarbonates, polyarylates, acrylic resins, polyvinyl alcohols, polystyrenes, polyurethanes, polyethylenes, polypropylenes, cellulosic plastics, epoxy resins, and phenolic resins.

The thickness of the light diffusing layer (B) is not specially limited, but is usually in the range of 10 to 500 µm.

The total light transmittance of the light diffusing layer (B) is preferably 50% or more, more preferably 70% or more. Further, the diffuse transmittance of the same layer is usually in the range of 5% to 85%, preferably 10% to 70%.

By forming the light diffusing layer described above, at least one layer, onto one or both sides of the optically anisotropic film (A) described previously, there is obtained the optically anisotropic element of the present invention.

A description will be given below of a concrete method for forming the light diffusing layer on the optically anisotropic film.

In the case where the optically anisotropic film (A) is formed in the manner described previously, it is usually formed on an orienting substrate. Therefore, if the orienting substrate used possesses a light diffusing property, the formation of the optically anisotropic film (A) affords the optically anisotropic element of the present invention. In the optically anisotropic element thus obtained, the light diffusing layer (B) may be further laminated onto the optically anisotropic film (A) side and/or the light diffusing layer (B) side used as an orienting substrate.

In the case where the film (A) has been formed using an orienting substrate not having a light diffusing property, an optically anisotropic element can be obtained by forming the light diffusing layer (B) on the side not in contact with the orienting substrate of the film (A). Also in this case, the light diffusing layer (B) may be further laminated onto the orienting substrate side of the optically anisotropic element and/or the layer (B) side laminated onto the film (A).

The optically anisotropic element of the present invention may be formed by removing the orienting substrate which has been used for forming the optically anisotropic film (A) and by subsequently forming the light diffusing layer (B) on the film (A). For example, if the orienting substrate used will exert a bad influence on the associated liquid crystal display device in view of transmittance and properties as an optical element despite of it being necessary for obtaining the nematic hybrid orientation, the orienting substrate is removed. For removing the orienting substrate there may be adopted, for example, a method of peeling off the substrate or a method of melting the substrate.

For example, in the case of forming the light diffusing layer (B) on the side not in contact with an orienting substrate of the optically anisotropic film (A) and then removing the orienting substrate, is convenient to adopt the following method.

First, the light diffusing layer (B) and the optically anisotropic film (A) on the orienting substrate are laminated together using, say, an adhesive or a pressure-sensitive adhesive, and then the orienting substrate is peeled off at the interface with the film (A).

In the case of forming the light diffusing layer (B) on the optically anisotropic film (A) on the side of the film which has been in contact with an orienting substrate, it is convenient to adopt the following method.

First, a releasable substrate and the surface of the optically anisotropic film (A) which surface is not in contact with the orienting substrate are laminated together using, say, an adhesive or a pressure-sensitive adhesive. Thereafter, the orienting substrate is peeled off at the interface with the film (A). Then, the light diffusing layer (B) is laminated to the surface of the film (A) which surface has been in contact with the orienting substrate, using, say, an adhesive or a pressure-sensitive adhesive. Subsequently, the releasable substrate is peeled off at the interface with the film (A).

Of course, in the optically anisotropic element thus obtained, the light diffusing layer (B) may be further laminated to the optically anisotropic film (A) on the side not in contact with the light diffusing layer (B).

The adhesive or pressure-sensitive adhesive to be used in the above lamination is not specially limited insofar as it is of an optical grade. For example, acrylic, as well as epoxy-, ethylene/vinyl acetate copolymer-, rubber- and urethane-based adhesives or pressure-sensitive adhesives, and mixtures thereof, are employable. Further, any of heat-curing, light-curing and electron beam-curing type adhesives may be used if only it is optically isotropic.

As the peeling method to be used in the above process there may be adopted, for example, any of a mechanical peeling method using a roll or the like, a method involving immersion in a poor solvent which is poor for all of the constituent materials and subsequent mechanical peeling, a peeling method using an ultrasonic wave in a poor solvent, a peeling method which utilizes a change in temperature induced by a difference in thermal expansion coefficient between the orienting substrate and the film, and a method involving melting off the orienting substrate itself or an orienting film formed on the orienting substrate. Since releasability differs depending on the kind (say, composition) of the positively uniaxial liquid crystalline polymer used and the adhesion to the orienting substrate, there should be adopted a method most suitable to the system concerned.

In the optically anisotropic element of the present invention, an overcoating layer such as a transparent plastic film may be formed on the optically anisotropic film (A) side and/or the light diffusing layer (B) side for the purpose of surface protection, strength enhancement and improvement of environmental reliability. It is desirable that the overcoating layer be substantially isotropic optically or negatively anisotropic.

In the case where the light diffusing layer (B) has an intra-plane anisotropy, it is desirable that the light diffusing layer (B) and the optically anisotropic film (A) be made uniform in the projection vectors of directors into the plane.

Description is now directed to the liquid crystal display device of the present invention using the optically anisotropic element described above. The liquid crystal display device comprises at least the optically anisotropic element, a driving liquid crystal cell, and upper and lower polarizing plates.

The optically anisotropic element of the present invention is disposed, at least one, between the upper and/or the lower polarizing plate and the driving liquid crystal cell. In the present invention it is desirable in point of practical use to employ one or two optically anisotropic elements. Using three or more optically anisotropic elements is not desirable in practical use because it leads to an increase of cost although it will be possible to compensate the viewing angle.

A description will be given in more detail about concrete conditions for disposing the optically anisotropic element, which conditions, however, are typical conditions and do not restrict the present invention.

First, a tilt direction of the optically anisotropic film (A) and a pretilt direction of the driving liquid crystal cell will be defined below.

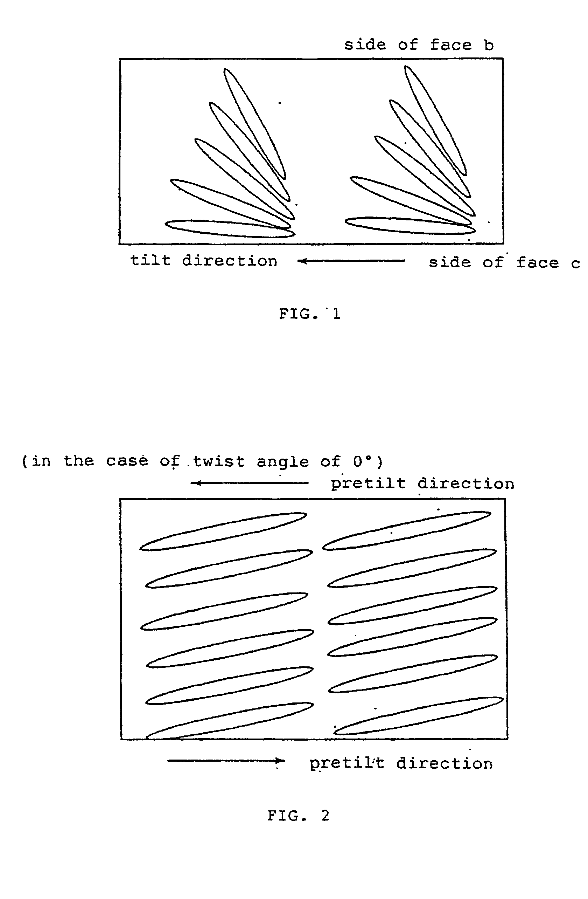

The tilt direction of the optically anisotropic film (A) as a constituent of the optically anisotropic element of the present invention is defined to be the direction of projection of directors in the liquid crystalline polymer at one of the upper and lower surfaces of the film which one surface is the smaller in the director-film surface angle. To be more specific, for example in Fig.1, the upper and lower surfaces of the optically anisotropic film (A) are assumed to be surfaces b and c, respectively. In the film (A), the director-film surface angle on the surface b side and that on the surface c side are in a relation of the former being larger than the latter. Next, when the surface c is seen in the film thickness direction from the surface b, the direction in which the angle between surface b- and surface c-side directors is an acute angle and in which projection components of the surface band surface c-side directors with respect to the film surfaces are parallel to each other, is defined to be the tilt direction of the optically anisotropic film (A). Usually, if the film (A) is obtained on a rubbed orienting substrate, the tilt direction of the film coincides with the rubbing direction.

Next, the pretilt direction of the driving liquid crystal cell is defined as follows. Usually, a low-molecular liquid crystal in the driving liquid crystal cell is not parallel to a cell substrate interface but tilts at a certain angle, assuming that the twist angle of the low-molecular liquid crystal is 0°, as in Fig.2. In this state, the direction in which the angle between directors of the low-molecular liquid crystal and a liquid crystal substrate surface is an acute angle and in which projection components of the directors are parallel, is defined to be the pretilt direction. Therefore, as shown in Fig.2, the pretilt direction is defined one for each of upper and lower cell substrates in the driving liquid crystal cell. Usually the pretilt direction coincides with the direction of rubbing applied to each liquid crystal cell substrate.

In accordance with the above definitions, at least one optically anisotropic element is disposed between the driving liquid crystal cell and the upper and/or lower polarizing plate. It is desirable to use one or two such compensating films. Using three or more such compensating films is not practical in point of cost although the liquid crystal display device of the present invention can be obtained thereby.

Reference will first be made to the case where one optically anisotropic element is used. The optically anisotropic element is disposed between the upper or the lower polarizing plate and the driving liquid crystal cell. In this case, the angle between the tilt direction of the optically anisotropic film (A) as a constituent of the optically anisotropic element and the pretilt direction at the driving liquid cell substrate located on the side opposite to the cell substrate closest to the film (A), is set to a value in the range (generally parallel) of usually 0° to 15°, preferably 0° to 10°, more preferably 0° to 5°, or in the range (generally anti-parallel) of usually 165° to 195°, preferably 170° to 190°, more preferably 175° to 185°, or in the range (generally orthogonal) of usually 75° to 105°, preferably 80° to 100°, more preferably 85° to 95°. Thus, the optically anisotropic element is disposed so that the angle between the tilt direction and the pretilt direction at the lower cell substrate if the optically anistropic film (A) is located on the upper surface side of the cell or at the upper cell substrate if the film (A) is located on the lower surface side of the cell, falls under any of the above angular ranges. Otherwise, it would be impossible to attain a satisfactory viewing angle compensating effect.

Next, reference will now be made to the case where two optically anisotropic elements are used. In this case, the two elements may be located on the same side, for example between the driving liquid crystal cell and the upper polarizing plate or between the cell and the lower polarizing plate. Or one element may be between the upper polarizing plate and the liquid crystal cell and the other between the lower polarizing plate and the cell. The two optically anisotropic elements may be of the same optical parameters or of different optical parameters. Further, one of the film (A) and the layer (B) in each optically anisotropic element may be located close to the upper or lower polarizing plate or to the driving liquid crystal cell.

A description will first be given of the case where one optically anisotropic element is disposed between the upper polarizing plate and the driving liquid crystal cell and the other between the lower polarizing plate and the cell. In this case it is desirable that each optically anisotropic element be disposed in the same manner as in the above case of using only one such element. That is, each of the optically anisotropic elements located respectively above and below the driving liquid crystal cell is disposed so that the angle between the tilt direction of the optically anisotropic film (A) as a constituent of the same element and the pretilt direction of the cell substrate remotest from the film (A) is in the range (generally parallel) of usually 0° to 15°, preferably 0° to 10°, more preferably 0° to 5°, or in the range (generally anti-parallel) of usually 165° to 195°, preferably 170° to 190°, more preferably 175° to 185°, or in the range (generally orthogonal) of usually 75° to 105°, preferably 80° to 100°, more preferably 85° to 95°.

A description will now be given of the case where two optically anisotropic elements are disposed between the driving liquid crystal cell and the upper or lower polarizing plate. In the following description it is assumed that the optically anisotropic element disposed at a position closest to the driving liquid crystal cell is the ansotropic element 1, the optically anisotropic film as a constituent of the anisotropic element 1 is the film 1, the optically anisotropic element disposed between the anisotropic element 1 and the upper or lower polarizing plate is the anisotropic element 2, and the optically anisotropic film as a constituent of the anisotropic element 2 is the film 2. As to the anisotropic element 1 closest to the liquid crystal cell is disposed under the same conditions as in the case of using only one optically anisotropic element described above. That is, the anisotropic element 1 is disposed so that the angle between the tilt direction of the film 1 as a constituent of the anisotropic element 1 and the pretilt direction of the liquid crystal cell substrate remotest from the film 1 is in the range (generally parallel) of usually 0° to 15°, preferably 0° to 10°, more preferably 0° to 5°, or in the range (generally anit-parallel) of usually 165° to 195°, preferably 170° to 190°, more preferably 175° to 185°, or in the range (generally orthogonal) of usually 75° to 105°, preferably 80° to 100°, more preferably 85° to 95°. As to the anisotropic element 2 to be located between the anisotropic element 1 and the upper or lower polarizing plate, it is disposed so that the angle between the tilt direction of the film 2 as a constituent of the anisotropic element 2 and the pretilt direction of the cell substrate closest to the anisotropic element, namely, the pretilt direction of the cell substrate opposite to the cell substrate referred to above in disposing the anisotropic element 1, is in the range (generally parallel) of usually 0° to 15°, preferably 0° to 10°, more preferably 0° to 5°, or in the range (generally anti-parallel) of usually 165° to 180°, preferably 170° to 180°, more preferably 175° to 189°, or in the range (generally orthogonal) of usually 75° to 105°, preferably 80° to 100°, more preferably 85° to 95°.

Since the optically anisotropic element of the present invention is constituted by the optically anisotropic film (A) having the nematic hybrid orientation, the upper and lower surfaces thereof are not equivalent to each other.

Therefore, in disposing the optically anisotropic element for a driving liquid crystal cell under the above conditions, there arises a difference in the viewing angle improving effect obtained, depending on which surface of the film (A) is made closer to the liquid crystal cell. In installing the optically anisotropic element of the present invention in the liquid crystal display device, it is more preferable that the side where the angle between a director of the liquid crystalline polymer in the optically anisotropic film (A) and a film surface is the larger, (the side where the said angle is in the range of 60° to 90°), be located near a polarizing plate and remote from the driving liquid crystal cell and so that the angle between the tilt direction of the optically anisotropic film (A) and the pretilt direction of the liquid crystal cell satisfies the foregoing condition of "generally anti-parallel."

Lastly, reference will be made to conditions for disposing polarizing plates. Usually, in TN-LCD, upper and lower polarizing plates are disposed so that the respective transmission axes are orthogonal or parallel to each other. Where upper and lower polarizing plates are disposed in a perpendicularly intersecting state of the respective transmission axes, both are disposed so that the transmission axis of each polarizing plate and the rubbing direction of the liquid crystal cell closest to the polarizing plate are orthogonal or parallel to each other or at an angle of 45°. Where a polarizing plate is disposed above the optically anisotropic element, no special limitation is placed on how to dispose the polarizing plate. There may be adopted any of the above disposing conditions. Particularly, by disposing upper and lower polarizing plates in such a manner that the respective transmission axes are orthogonal to each other and so that the transmission axis of each polarizing plate and the rubbing direction of a liquid crystal cell substrate closest to the polarizing plate are parallel to each other, there can be obtained a liquid crystal display device which is very superior in display characteristics such as viewing angle characteristics and display contrast.

### EXAMPLES

Working examples of the present invention will be described below, but it is to be understood that the invention is not limited thereto.

The following analyzing methods were adopted in the working example.

### (1) Determining the composition of a liquid crystalline polymer

A liquid crystalline polymer was dissolved in deuterated chloroform or deuterated trifluoroacetic acid and the composition thereof was determined by ¹H-NMR of 400 MHz (JNM-GX400, a product of Japan Electron Optics Laboratory Co., Ltd.).

### (2) Determining an inherent viscosity

Using a Ubbelohde's viscometer, an inherent viscosity was determined in a mixed phenol/tetrachloroethane (60/40 weight ratio) solvent at 30°C.

### (3) Determining a liquid crystal phase series

Determined using a DSC (DSC-7, a product of Perkin Elmer) and by observation through an optical microscope (a polarizing microscope BH2, a product of Olympus Optical Co., Ltd.) on a hot stage (FP-82HT, a product of Mettler Co.).

### (4) Refractive Index

Determined using an Abbe's refractometer (Type-4, a proudct of Atago K.K.).

### (5) Polarization Analysis

Conducted using an ellipsometer DVA-36VWLD (a product of Mizoshiri Kogaku Kogyo K.K.).

### (6) Film Thickness

The thickness of an optically anisotropic film (A) was measured using SURFACE TEXTURE ANALYSIS SY-STEM Dektak 3030ST (a product of SLOAN). There also was adopted a method of determining the film thickness by interference wave measurement (an ultraviolet, visible, near infrared spectrophotometer V-570, a product of Nippon Bunko K.K.) and on the basis of refractive index data.

### Reference Example 1

### (Preparing a liquid crystalline polymer and making sure the homeotropic orientation on an unoriented substrate)

Polymerization was carried out in a nitrogen atmosphere at 270°C for 12 hours, using 10 mmols of 4-n-heptylbenzoic acid, 95 mmols of terephthalic acid, 50 mmols of methylhydroquinone diacetate, 50 mmols of 3-methylcatechol diacetate, and 100 mg of sodium acetate. The resultant reaction product was then dissolved in tetrachloroethane and then purified by reprecipitation with methanol to afford 22.0 g of a liquid crystalline polyester (formula 1). This liquid crystalline polyester had an inherent viscosity of 0.15, had a nematic phase as a crystal phase, and had an isotropic phase - liquid crystal phase transition temperature of 250°C and a glass transition point of 75°.

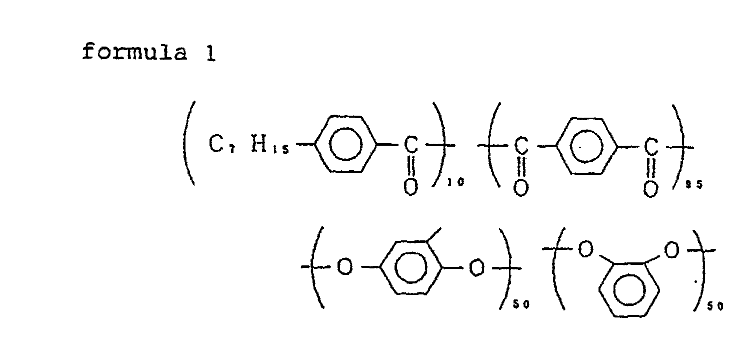

Using this liquid crystalline polyester, there was prepared a 10 wt% solution thereof in a mixed phenol/tetrachloroethane (6/4 weight ratio) solvlent. This solution was then applied onto a soda glass plate in accordance with a bar coating method and the solvent was removed, followed by heat treatment at 190°C for 30 minutes and subsequent cooling at room temperature to fix orientation. As a result, a uniformly oriented liquid crystalline film having a thickness of 15 µm was obtained. As a result of conoscope observation, the liquid crystalline polymer was found to have a positive uniaxial structure and proved to exhibit a homeotropic orientation.

### Example 1

### (Preparing an optically anisotropic film (A) and an optically anisotropic element)

Using a bar coater, a long-chain alkyl-modified polyvinyl alcohol (MP203, a product of Kuraray) was applied onto Zeonex 280 (film) (a product of Nippon Zeon Co., Ltd.). After subsequent warm air drying, the coated film was rubbed to afford an oriented film. In this way there was obtained an orienting substrate. Separately, an 8 wt% solution in tetrachloroethane of the liquid crystalline polyester obtained in Reference Example 1 was prepared. This solution was then applied onto the above orienting substrate by a spin coating method and thereafter the solvent was removed, followed by heat treatment at 190° for 20 minutes and subsequent air cooling to fix orientation. As a result, a film of the liquid crystalline polyester was obtained on the orienting substrate through the oriented film. The thickness of the film thus obtained was 1.55 µm.

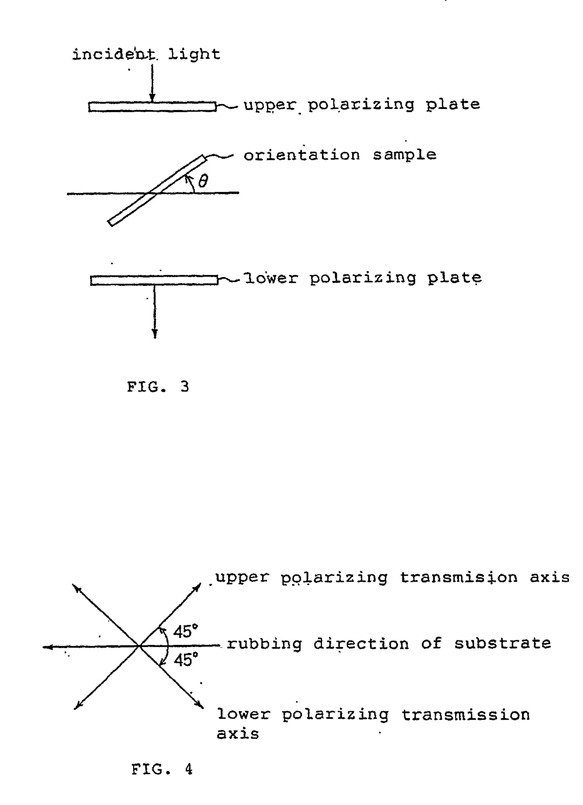

Then, using an optical measurement system shown in Figs.3 and 4, a retardation value of the film was measured while the film was tilted in the rubbing direction of the substrate. The said retardation value obtained in this measurement also includes a retardation value of the orienting substrate, so a measured value of the orienting substrate alone, which had been measured beforehand in the through the pressure-sensitive adhesive and the orienting substrate.

### (Controlling the tilt angle of a nematic hybrid orientation layer)

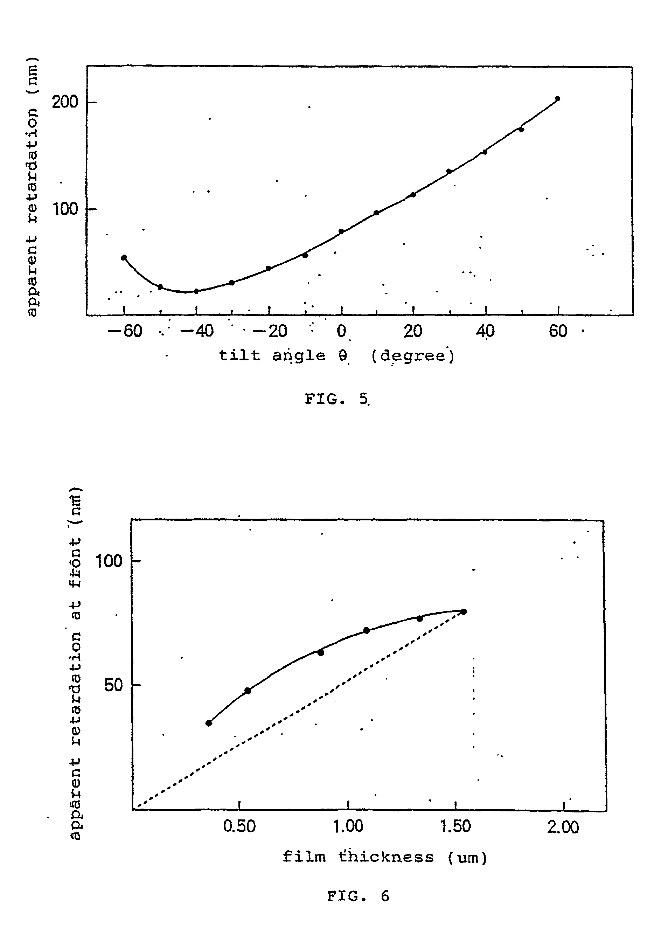

A film formed by the liquid crystalline polyester was cut into five divided films, each of which was then dipped in a methanol solution containing 3 wt% of chloroform for a predetermined certain time, allowing elution to take place from the upper surface of the liquid crystal layer. When the films were dipped for 15 seconds, 30 seconds, 1 minute, 2 minutes and 5 minutes, respectively, the thicknesses of their liquid crystal layers left uneluted were 1.35 µm, 1.10 µm, 0.88 µm, 0.56 µm, and 0.37 µm, respectively. Using the optical system shown in Figs.3 and 4, retardation values (front retardation values) at θ = 0° were measured and there was obtained such a film thickness - retardation value relation as shown in Fig.6. As is seen from the same figure, the film thicknesses and the retardation values are not in a linear relation, thus indicating that the orientation obtained is not a uniform tilt orientation. The dotted line in the figure is a straight line which is observed in a film of uniform tilt orientation.

### (Determining a refractive index and the direction of orientation directors of the liquid crystlaline polymer in a nematic hybrid orientation layer)

The liquid crystalline polyester of formula (1) was same manner, was subtracted from the above retardation value to obtain a retardation value of the film alone. In this way there was obtained such a result as shown in Fig.5, which is asymmetric right and left and in which there is no angle corresponding to a retardation value of zero. From this result it turned out that in the orientation structure of the film constituted by the liquid crystalline polyester the liquid crystal directors tilted with respect to the substrate and that this orientation was not a uniform tilt orientation (a state of orientation in which the director-substrate surface angle is constant in the film thickness direction).

As a result of the following various optical measurements conducted for the film it turned out that the film could be used as the optically anisotropic film (A).

Then, a light diffusing sheet IDS-10 (total light transmittance 93.0%, diffuse transmittance 26.4%, haze 28.4, a product of Dai Nippon Printing Co., Ltd.) was laminated to the liquid crystalline polyester side of the film through a non-carrier pressure-sensitive adhesive (a product of Tomoegawa Paper Mfg. Co., Ltd.).

Through the above steps there was prepared an optically anisotropic element in which an optically anisotropic film was formed on the light diffusing sheet oriented and fixed onto a high.refractive index glass substrate (refractive index 1.84) having a rubbed polyimide film, in the same manner as above, to prepare a film 1'. Then, using the film 1', there was made a refractive index measurement. The film 1' was disposed so that the glass substrate came into contact with a prism surface of a refractometer and so that the substrate interface side of the film 1' was positioned below the air interface side thereof. In this case, intra-film surface refractive indices are anisotropic. The refractive index in a surface perpendicular to the rubbing direction is 1.55 and the refractive index in a surface parallel to the rubbing direction is 1.70. Further, the refractive index in the film thickness direction was 1.55 independently of the sample direction. Thus, it turned out that, on the glass substrate side, rod-like liquid crystal molecules constituting the liquid crystalline polyester were oriented planarly in parallel with the substrate. Next, the film 1' was disposed so that its air interface side came into contact with the prism surface of the refractometer. In this case, no anisotropy was observed in intra-film surface refractive index, which refractive index was 1.55 and constant. The refractive index in the film thickness direction was 1.70 and constant independently of the sample direction. Thus, it turned out that, on the air interface side of the film, rod-like liquid crystal molecules of the liquid crystalline polyester were oriented perpendicularly to the substrate surface.

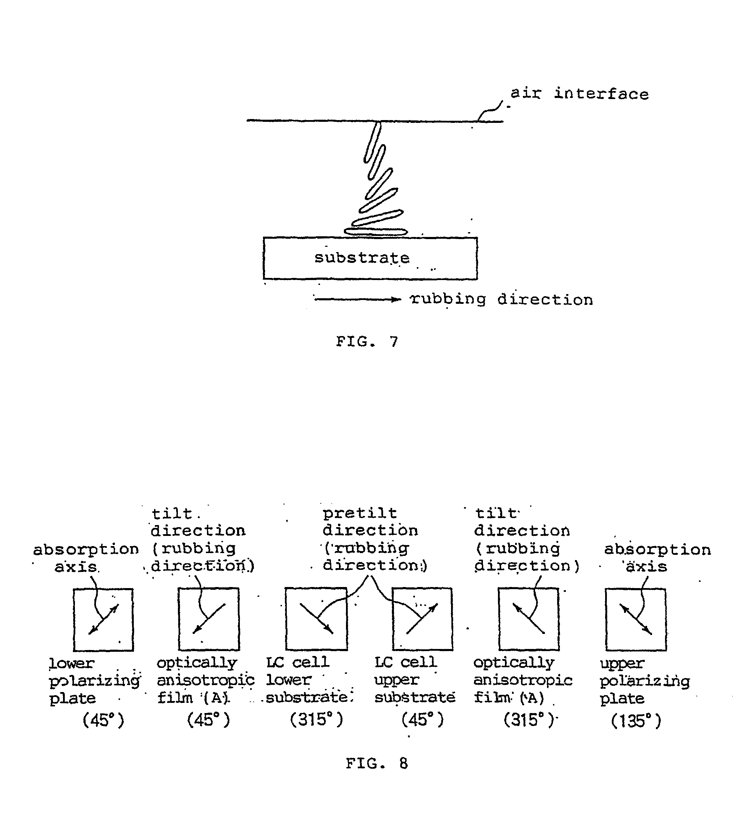

The above results show that the film formed from the liquid crystalline polyester (1) has a nematic hybrid orientation structure. It also turned out that a nematic hybrid orientation was ensured with a restricting force of the substrate interface and that of the air interface both induced by rubbing, as shown in Fig.7.

Next, the following operation was performed to determine the angle of director direction at the substrate interface more accurately.

Another glass substrate having a rubbed polyimide film was applied onto the film 1' formed on the above high refractive index glass substrate having a rubbed polyimide film and was brought into close contact with the film. That is, the film 1' was sandwiched in between two rubbed polyimide films. In this case, both glass substrates were disposed so that the rubbing directions of the upper and lower rubbed films are at 180° relative to each other. In this state there was made heat treatment at 190° for 30 minutes. The film thus obtained was then subjected to refractive index measurement and polarization analysis. As a result of the refractive index measurement there was obtained the same value for both upper and lower surfaces of the sample film. Refractive indices in sample film surfaces were 1.55 in a surface perpendicular to the rubbing direction, 1.70 in a plane parallel to the rubbing direction, and 1.55 in the film thickness direction.

From the above results it turned out that, in the vicinity of substrate interfaces in the sample film, directors were nearly parallel to both upper and lower substrates surfaces. Further, as a result of polarization analysis the sample film proved to have a substantially positive uniaxial refractive index structure. On this regard, a detailed analysis was conducted in accordance with a crystal rotation method. As a result, in the vicinity of a substrate interface there was a slight tilt of director and the director-substrate surface angle was about 3°. The tilting direction of the director was coincident with the rubbing direction.

From the above results it is presumed that the direction of director at a substrate interface is determined substantially by an interaction between the liquid crystalline polyester and an orienting substrate interface. Consequently, the direction of director at a substrate interface in the nematic hybrid orientation of the film formed by the liquid crystalline polyester on the foregoing single orienting substrate is presumed to be a direction of 3° relative to the substrate interface.

### Example 2

A liquid crystalline polyester of formula (2) was prepared in the same way as in Example 1. This liquid crystalline polyester had an inherent viscosity of 0.16, had a nematic phase as a crystal phase, and had an isotropic phase - liquid crystal phase transition temperature of 220°C and a glass transition point of 100°C. As a result of an orientation test conducted in the same manner as in Example 1, this liquid crystalline polyester proved to exhibit a homeotropic orientation and have a positive uniaxial property.

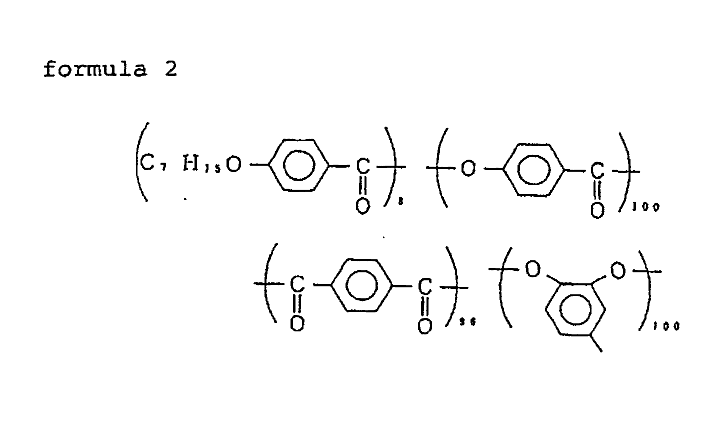

A 7 wt% solution of the above polyester in chloroform was prepared. The solution thus prepared was applied onto a rubbed polyethylene terephthalate film by a spin coating method, then dried, heat-treated at 250°C for 30 minutes, and cooled to fix orientation. As a result of the same optical measurement as in Example 1, the film thus formed proved to have a uniform nematic hybrid orientation structure and have characteristics an an optically anisotropic film.

Then, using a bar coater, a commercially available ultraviolet curing type epoxy resin was applied 2 µm to the surface of the film. Next, using a desk laminator, a polycarbonate film was laminated to the thus-coated surface and the resin was allowed to cure by the radiation of a predetermined amount of ultraviolet light. Then, at the interface between the polyethylene terephthalate film and the liquid crystalline polyester film the polyethylene terephthalate film was peeled off using a roll, allowing the polyester film to be transferred onto the polycarbonate film. Further, a light diffusing layer was laminated through a pressure-sensitive adhesive to the surface of the thus-transferred polyester film which surface was in contact with air. The light diffusing layer had been obtained by dispersing 10 wt% of fine silica particles in an acrylic monomer (containing a photopolymerization initiator), subsequent application of the dispersion to a triacetylcellulose film with use of a bar coater and subsequent curing by ultraviolet radiation. The light diffusing layer had such physical properties as a total light transmittance of 93.0%, a diffuse transmittance of 26.4% and a haze of 28.4.

In this way there was prepared an optically anisotropic element with an optically anisotropic film formed on the light diffusing layer through the pressure-sensitive adhesive.

In the optically anisotropic element thus prepared, thickness of the optically anisotropic film (A) was 0.40 µm and an average tilt angle in the film thickness direction was 45°.

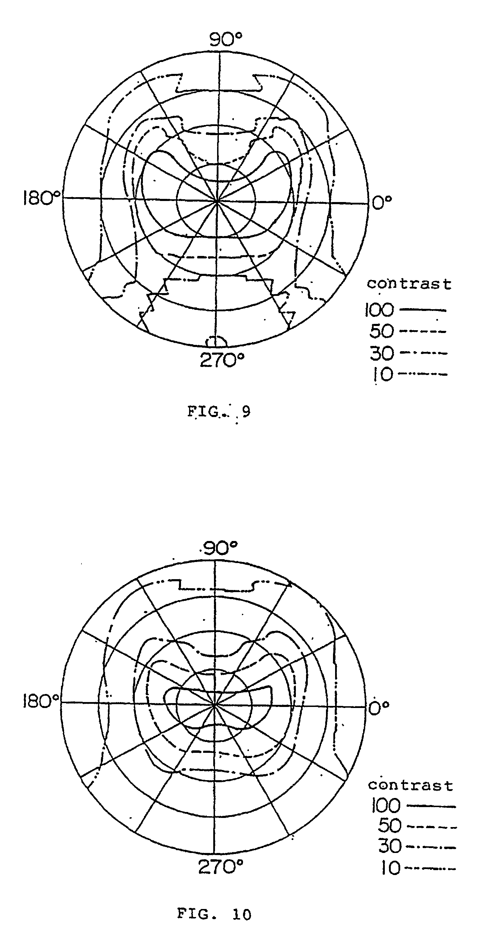

Using this optically anisotropic element, there was made a liquid crystal display device in such an arrangement as shown in Fig.8. Two such optically anisotropic elements were disposed respectively above and below a TN type driving liquid crystal cell so that the light diffusing layer sides of the optically anisotropic films constituting the optically anisotropic elements were closest to the liquid crystal cell. As to the TN type driving liquid crystal cell, ZLI-4792 was used as a liquid crystal material, and cell parameters were a cell gap of 4.8 µm, a twist angle of 90° (left twist) and a pretilt angle of 4°. A voltage was applied to the liqid crystal cell in terms of a square wave of 300 Hz. A transmittance ratio, (white display)/(black display), of white display 0V and black display 6V was used as a contrast ratio and a contrast ratio measurement from all directions was made using an FFP optical system DVS-3000 (a product of Hamamatsu Photonix K.K.). Equicontrast curves were drawn. The results obtained are shown in Fig.9.

### Example 3

Liquid crystalline polyesters of formulae (3) and (4) were prepared in the same way as in Example 1. The liquid crystalline polyester of formula (3) had an inherent viscosity of 0.10, had a nematic phase as a crystal phase, and had an isotropic phase - liquid crystal phase transition temperature of 180°C. As a result of the same orientation test as in Example 1, the liquid crystalline polyester of formula (3) proved to exhibit a homeotropic orientation and have an optically positive uniaxial property.

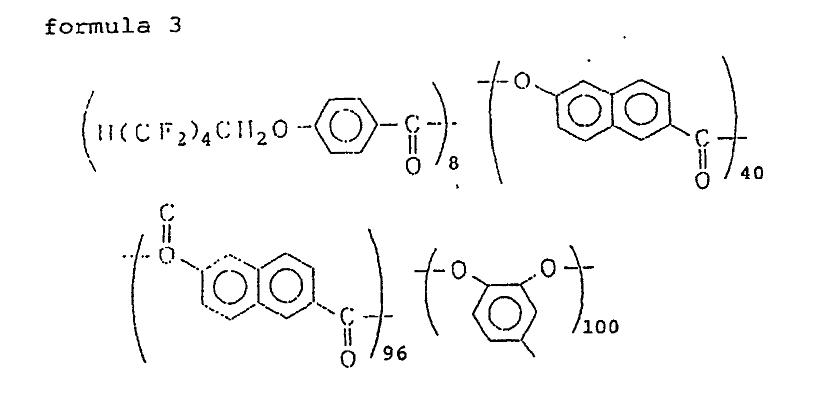

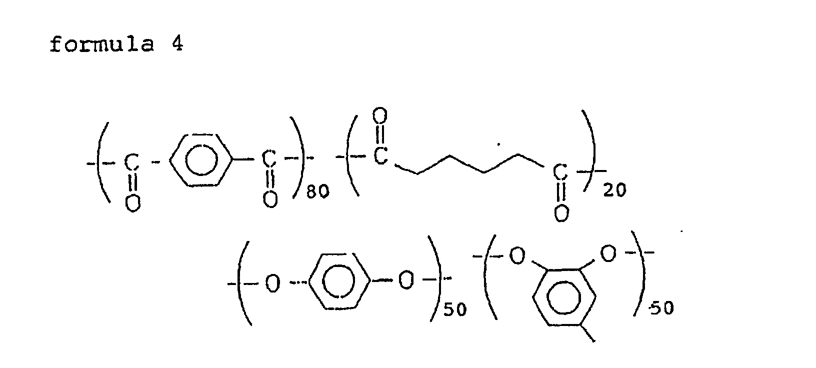

The liquid crystalline polyester of formula (4) had an inherent viscosity of 0.18, had a nematic phase as a crystal phase, and had an isotropic phase - liquid crystal phase transition temperature of not lower than 300°C. A 10 wt% solution of the liquid crystalline polyester in a mixed phenol/tetrachloroethane (6/4 weight ratio) solvent was prepared. The solution thus prepared was applied to various substrates for the test of orientation in accordance with a screen printing method, then dried and heat-treated at 230°C for 10 minutes. As substrates were used soda glass, borosilicate glass, polyethylene terephthalate film, polyimide film, polyether imide film, polyether ether ketone film, and polyether sulfone film. On all the substrates was observed a schlieren texture by observation of the liquid crystal phase using a polarizing microscope. Thus, this polymer proved to exhibit a homogeneous orientation.

An 8 wt% solution in N-methyl-2-pyrrolidone containing the liquid crystalline polyesters of formulae (3) and (4) at a weight ratio of 50:50 was prepared. This solution was then applied onto a rubbed, 40 cm wide, polyphenylene sulfide film over a length of 10 cm in accordance with a die coating method, then dried with 120°C hot air, heat-treated at 220°C for 10 minutes and cooled to fix orientation. Thus film thus obtained was subjected to the same optical measurement as in Example 1 and was found to have a uniform nematic hybrid orientation structure and have characteristics as an optically anisotropic film (A).

Then, using a bar coater, a commercially available ultraviolet curing type epoxy resin was applied 2 µm onto the surface of the film obtained above. Next, an easily-adhesive side of a polyethylene terephthalate film as a releasable substrate, which had been subjected to treatment for easy adehsion, was laminated to the above coated surface with use of a desk laminator and was thereafter cured by radiating a predetermined amount of ultraviolet light thereto. The resulting laminate was then immersed in water for 1 hour and thereafter the polyphenylene sulfide film was peeled off in water at the interface between it and the liquid crystalline polyester film (optically anisotropic film (A)).

After drying to a sufficient extent, a triacetyl cellulose film was laminated through a pressure-sensitive adhesive to the air interface side (the side with which the polyphenylene sulfide film had been contacted) of the thus-transferred optically anisotropic film (A).

Thereafter, the polyethylene terephthalate film was peeled off at the interface with the cured epoxy resin layer. The cured epoxy resin layer left on the liquid crystalline polyester film (optically anisotropic film (A)) was used as it was as a protective layer.

Then, a light diffusing sheet IDS-10 (total light transmittance 93.0%, diffuse transmittance 26.4%, haze 28.4, a product of Dai Nippon Printing Co., Ltd.) was laminated as the light diffusing layer (B) to the liquid crystalline polyester side of the above film through a pressure-sensitive adhesive.

In this way there was prepared an optically anisotropic element with an optically anisotropic film formed on the light diffusing layer (B) through a pressure-sensitive adhesive.

The thickness of the liquid crystalline polyester film in the optically anisotropic element was 0.62 µm and an average tilt angle thereof in the film thickness direction was 37°.

Polarizing plates of a liquid crystal color television XTL-610 (a product of Sony Corporation) were peeled off and two such optically anisotropic elements as prepared above were laminated respectively to the upper and lower sides of a driving liquid crystal cell so that the respective triacetyl cellulose film sides were closest to the liquid crystal cell. Then, upper and lower polarizing plates were laminated respectively to the protective layer sides of the optically anisotropic elements. The optical components used are in such an axis arrangement as shown in Fig.8. Then, in the same manner as in Example 3, contrast ratios were measured in all directions, the results of which are shown in Fig.10.
Fig.1 is a conceptual diagram showing a tilt direction of an optically anisotropic film (A) which constitutes the optically anisotropic element of the present invention.
Fig.2 is a conceptual diagram showing pretilt directions of a driving liquid crystal cell.
Fig.3 is a layout diagram of an optical measurement system use in measuring a tilt angle of the optically anisotropic film (A).
Fig.4 is a diagram showing a relation of axis directions between a sample and polarizing plates in the optical measurement system used in the tilt angle measurement for the optically anisotropic film (A).
Fig.5 is a diagram showing a relation between apparent retardation values as measured in a tilted state along a substrate rubbing direction and sample tilt angles in Example 1.
Fig.6 is a diagram showing the results of having measured thicknesses after immersion of the optically anisotropic film (A) and apparent retardation values on the front side of sample in Example 1.
Fig.7 is a conceptual diagram showing an orientation structure of the optically anisotropic film (A).
Fig.8 is a diagram showing an axis arrangement of optical components used in Examples 2 and 3.
Fig.9 is a diagram showing equicontrast curves obtained in Example 2.
Fig.10 is a diagram showing equicontrast curves obtained in Example 3.

## Claims

1. An optically anisotropic element comprising an optically anisotropic film formed substantially by a liquid crystalline polymer; at least one light diffusing layer and a nematic hybrid orientation structure being fixed to the optically anisotropic film, said nematic hybrid orientation structure being formed by said liquid crystalline polymer in the state of liquid crystal of the polymer, **characterised in** the said liquid crystalline polymer exhibits an optically positive uniaxial property.

2. An optically anisotropic element as set forth in claim 1, wherein said liquid crystalline polymer exhibiting an optically positive uniaxial property contains at least one kind of a monofunctional structural unit at one or both ends of the polymer chain, or is used as a composition containing the liquid crystalline polymer.

3. An optically anisotropic element as set forth in claim 1 or claim 2, wherein said light diffusing layer has a total light transmittance of 50% or more.

4. An optically anisotropic element as set forth in any of claims 1 to 3, wherein said light diffusing layer has a total light transmittance of 70% or more.

5. An optically anisotropic element as set forth in any of claims 1 to 4, wherein said light diffusing layer has a diffuse transmittance of 5% to 85%.

6. An optically anisotropic element as set forth in any of claims 1 to 5, wherein said light diffusing layer has a diffuse transmittance of 10% to 70%.

7. An optically anisotropic element as set forth in any of claims 1 to 6, wherein said light diffusing layer is present at least one layer in contact with one or both sides of said optically anisotropic film.

8. A twisted nematic type liquid crystal display device including:
a driving liquid crystal cell, said driving liquid crystal cell comprising a pair of transparent substrates having electrodes and a nematic liquid crystal;
an upper polarizing plate and a lower polarizing plate which are disposed respectively above and below said liquid crystal cell;
and one optically anisotropic element according to any of claims 1 to 7 disposed between said liquid crystal cell and one of said upper or lower polarizing plates and, optionally, a second one of said optically anisotropic elements disposed between said liquid crystal cell and the other one of said upper and lower polarizing plates.

## Patentansprüche

1. Optisch anisotropes Element, umfassend einen optisch anisotropen Film, der im Wesentlichen durch ein Flüssigkristallpolymer gebildet wird, mindestens eine Licht streuende Schicht und eine nematische hybride Orientierungsstruktur, die an den optisch anisotropen Film fixiert ist, wobei diese nematische hybride Orientierungsstruktur durch das Flüssigkristallpolymer im Flüssigkristallzustand des Polymers gebildet wird, **dadurch gekennzeichnet, dass** das Flüssigkristallpolymer eine optisch positive uniaxiale Eigenschaft aufweist.

2. Optisch anisotropes Element nach Anspruch 1, in dem das eine optisch positive uniaxiale Eigenschaft aufweisende Flüssigkristallpolymer mindestens eine Art einer monofunktionellen Struktureinheit an einem oder beiden Enden der Polymerkette aufweist oder eine das Flüssigkristallpolymer enthaltende Zusammensetzung ist.

3. Optisch anisotropes Element nach Anspruch 1 oder 2, in dem die Licht streuende Schicht insgesamt eine Lichtdurchlässigkeit von 50 % oder mehr hat.

4. Optisch anisotropes Element nach einem der Ansprüche 1 bis 3, in dem die Licht streuende Schicht insgesamt eine Lichtdurchlässigkeit von 70 % oder mehr hat.

5. Optisch anisotropes Element nach einem der Ansprüche 1 bis 4, in dem die Licht streuende Schicht eine diffuse Durchlässigkeit von 5 bis 85 % hat.

6. Optisch anisotropes Element nach einem der Ansprüche 1 bis 5, in dem die Licht streuende Schicht eine diffuse Durchlässigkeit von 10 bis 70 % hat.

7. Optisch anisotropes Element nach einem der Ansprüche 1 bis 6, in dem die Licht streuende Schicht als mindestens eine Schicht in Kontakt mit einer oder beiden Seiten des optisch anisotropen Films vorliegt.

8. Flüssigkristallanzeigevorrichtung vom verdrillten nematischen Typ, umfassend
eine Flüssigkristallzelle als Antrieb, wobei die als Antrieb dienende Flüssigkristallzelle ein Paar transparente Substrate mit Elektroden und einen nematischen Flüssigkristall umfasst;
eine obere polarisierende Platte und eine untere polarisierende Platte, die oberhalb bzw. unterhalb der Flüssigkristallzelle angeordnet sind;
und ein optisch anisotropes Element nach einem der Ansprüche 1 bis 7, das zwischen der Flüssigkristallzelle und einer der oberen oder unteren polarisierenden Platten angeordnet ist, sowie ggfs. ein zweites dieser optisch anisotropen Elemente, das zwischen der Flüssigkristallzelle und der anderen der oberen und unteren polarisierenden Platten angeordnet ist.

## Revendications

1. Elément optiquement anisotrope comprenant un film optiquement anisotrope essentiellement formé d'un polymère cristallin liquide ; au moins une couche de diffusion de lumière et une structure d'orientation nématique hybride étant fixée au film optiquement anisotrope, ladite structure d'orientation nématique hybride étant formée par ledit polymère cristallin liquide dans l'état de cristal liquide du polymère, **caractérisé en ce que** ledit polymère cristallin liquide présente une propriété uniaxiale optiquement positive.

2. Elément optiquement anisotrope selon la revendication 1, dans lequel ledit polymère cristallin liquide présentant une propriété uniaxiale optiquement positive contient au moins un type d'unité structurale monofonctionnelle à une ou aux deux extrémités de la chaîne polymérique, ou est une composition contenant le polymère cristallin liquide.

3. Elément optiquement anisotrope selon la revendication 1 ou la revendication 2, dans lequel ladite couche de diffusion de lumière a une transmittance de lumière totale supérieure ou égale à 50 %.

4. Elément optiquement anisotrope selon l'une quelconque des revendications 1 à 3, dans lequel ladite couche de diffusion de lumière a une transmittance de lumière totale supérieure ou égale à 70 %.

5. Elément optiquement anisotrope selon l'une quelconque des revendications 1 à 4, dans lequel ladite couche de diffusion de lumière a une transmittance diffuse de 5 % à 85 %.

6. Elément optiquement anisotrope selon l'une quelconque des revendications 1 à 5, dans lequel ladite couche de diffusion de lumière a une transmittance diffuse de 10 % à 70 %.

7. Elément optiquement anisotrope selon l'une quelconque des revendications 1 à 6, dans lequel ladite couche de diffusion de lumière présente au moins une couche en contact avec un ou les deux côtés dudit film optiquement anisotrope.

8. Dispositif d'affichage à cristaux liquides de type nématique en hélice comprenant :
une cellule à cristaux liquides de commande, ladite cellule à cristaux liquides de commande comprenant une paire de substrats transparents ayant des électrodes et un cristal liquide nématique ;
une plaque de polarisation supérieure et une plaque de polarisation inférieure qui sont agencées respectivement en dessus et en dessous de ladite cellule à cristaux liquides ;
et un élément optiquement anisotrope selon l'une quelconque des revendications 1 à 7 agencé entre ladite cellule à cristaux liquides et une desdites plaques de polarisation supérieure ou inférieure et, éventuellement, un second desdits éléments optiquement anisotropes agencé entre ladite cellule à cristaux liquides et l'autre desdites plaques de polarisation supérieure et inférieure.
